(19) Europäisches Patentamt / European Patent Office / Office européen des brevets

(11) EP 4 614 214 A1

(12) **EUROPEAN PATENT APPLICATION**
published in accordance with Art. 153(4) EPC

(43) Date of publication:
**10.09.2025 Bulletin 2025/37**

(21) Application number: **23900732.1**

(22) Date of filing: **07.12.2023**

(51) International Patent Classification (IPC):
***G02C 7/00*** (2006.01) ***G02B 1/14*** (2015.01)
***G02B 1/18*** (2015.01) ***G02C 13/00*** (2006.01)

(52) Cooperative Patent Classification (CPC):
**G02B 1/14; G02B 1/18; G02C 7/00; G02C 13/00**

(86) International application number:
**PCT/JP2023/043897**

(87) International publication number:
**WO 2024/122620 (13.06.2024 Gazette 2024/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.12.2022 JP 2022196842**
**09.12.2022 JP 2022196957**
**09.12.2022 JP 2022196984**
**09.12.2022 JP 2022197034**

(71) Applicant: **Hoya Lens Thailand Ltd.**
**Pathumthani 12130 (TH)**

(72) Inventors:
- **ISHIZAKI, Takako**
  **Shinjuku-ku, Tokyo (JP)**
- **FUKUNAGA, Yasuko**
  **Shinjuku-ku, Tokyo (JP)**

(74) Representative: **Kraus & Lederer PartGmbB**
**Thomas-Wimmer-Ring 15**
**80539 München (DE)**

(54) **EYEGLASS LENS**

(57) One embodiment of the present disclosure relates to a spectacle lens including, an antifouling layer including a condensed structure of a fluorinated alkyl group and a silyl group on an outermost surface thereof, wherein a contact angle $\theta_A$ of a surface of the antifouling layer with respect to water is 108° or more, and a withstand load T is 3.5 kg or more in a withstand load test below.

Fig. 1

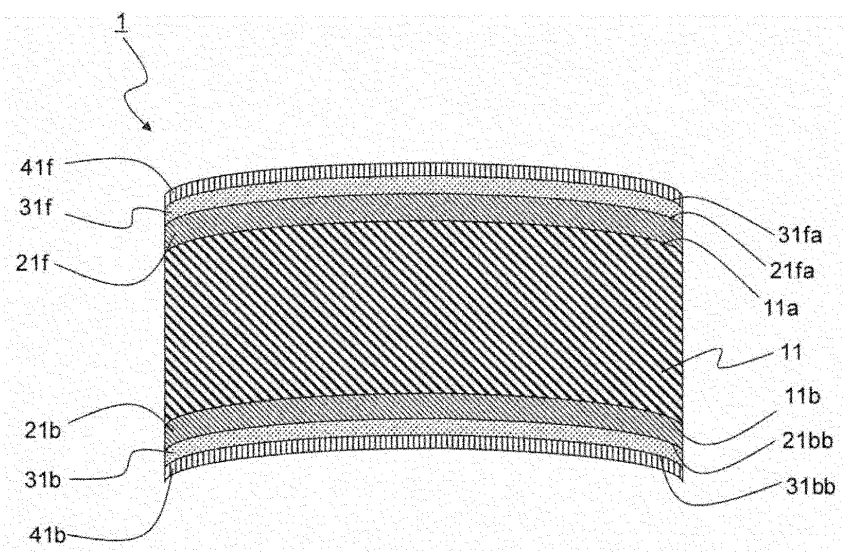




Processed by Luminess, 75001 PARIS (FR)

## Description

[Technical Field]

The present disclosure relates to a spectacle lens, an antifouling agent composition, and a method of producing a spectacle lens.

[Background Art]

When a spectacle lens is used, stains caused by adhesion of hand grime, fingerprints, sweat, and cosmetics and the like become conspicuous. Therefore, an antifouling layer is provided on the surface to make the spectacle lens less likely to become dirty or to make it easier to wipe off stains. For example, PTL 1 discloses a spectacle lens having a fluorine-containing antifouling film on its surface, wherein the surface free energy is 10.0 $mJ/m^2$ or less, and the base component of the surface free energy is 0.95 $mJ/m^2$ or less.

[Citation List]

[Patent Literature]

[PTL 1] Japanese Patent Application Publication No. 2018-004921

[Summary of Invention]

One embodiment of the present disclosure relates to a spectacle lens comprising, an antifouling layer including a condensed structure of a fluorinated alkyl group and a silyl group on an outermost surface thereof,

wherein a contact angle $\theta_A$ of a surface of the antifouling layer with respect to water is 108° or more, and
a withstand load T is 3.5 kg or more in a withstand load test below.

<Withstand Load Test>

The surface of the spectacle lens is wiped off with acetone to remove grease, dirt and the like. In a reciprocating friction and wear tester (commercially available from Shinto Scientific Co., Ltd.), using steel wool (Bonstar #0000, commercially available from Nihon Steel Wool Co., Ltd.) cut into 70×18 mm strips and wrapped around an eraser, a convex surface of the spectacle lens is rubbed back and forth 20 times with a load of 2.5 kg, a load of 3.0 kg, a load of 3.5 kg, and a load of 4.0 kg, increasing in 0.5 kg increments. Then, the surface of the spectacle lens is wiped off with acetone again, and then exposed to light from a fluorescent lamp, and the reflected light is used to visually check whether there are peeled-off film scratches according to a linear peeled off film in a length of about 5 mm. The test is performed at three locations per spectacle lens, a spectacle lens with one or fewer peeled-off film locations is determined to be satisfactory, a spectacle lens with two or more peeled-off film locations is determined to be unsatisfactory, and the load that is one level lighter than the load when it is determined to be unsatisfactory is recorded as the withstand load. The withstand load of five spectacle lenses is evaluated in the same manner and the average value is taken as the withstand load T.

One embodiment of the present disclosure relates to a spectacle lens having an antifouling layer containing a group represented by Formula (1a):

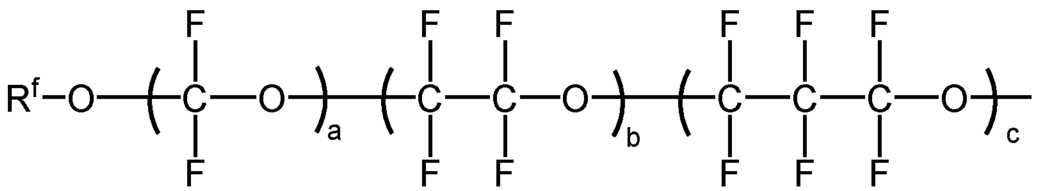

(1a)

(in the formula, $R^f$ is a fluorinated alkyl group having 1 to 20 carbon atoms, a is 0 to 100, b is 0 to 100, c is 0 to 100, and a+b+c is 10 to 200),
wherein, when the number of carbon atoms for $R^f$ in Formula (1a) is k, a value LA of [k+2×a+3×b+4×c] is 30 to 200.

One embodiment of the present disclosure relates to an antifouling agent composition containing a compound (A) having a group represented by Formula (1a):

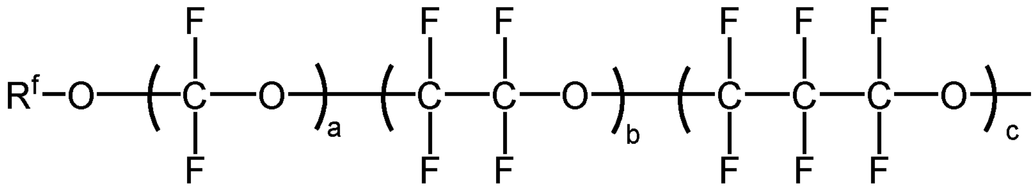

(1a)

(in the formula, $R^f$ is a fluorinated alkyl group having 1 to 20 carbon atoms, a is 0 to 100, b is 0 to 100, c is 0 to 100, and a+b+c is 10 to 200), and at least one silyl group,

wherein, when the number of carbon atoms for $R^f$ in Formula (1a) is k, a value of [k+2×a+3×b+4×c] is 30 to 200.

One embodiment of the present disclosure relates to a method of producing a spectacle lens including a process of forming an antifouling layer on a spectacle lens using the above antifouling agent composition.

One embodiment of the present disclosure relates to a spectacle lens having an antifouling layer which is a condensation product of an antifouling agent composition containing a compound (A) having at least one silyl group and a fluorinated alkyl group and a compound (B) having silyl groups at both ends of a molecular chain.

One embodiment of the present disclosure relates to an antifouling agent composition containing a compound (A) having at least one silyl group and a fluorinated alkyl group, and a compound (B) having silyl groups at both ends of a molecular chain.

One embodiment of the present disclosure relates to a method of producing a spectacle lens including a process of forming an antifouling layer on a spectacle lens using an antifouling agent composition containing a compound (A) having at least one silyl group and a fluorinated alkyl group and a compound (B) having silyl groups at both ends of a molecular chain.

One embodiment of the present disclosure relates to a spectacle lens having an antifouling layer which is a condensation product of an antifouling agent composition which contains a compound (A) having a silyl group and a fluorinated alkyl group and a compound (B) having a silyl group at at least one end of a molecular chain, wherein the number average molecular weight of the compound (A) is 100 to 10,000, the number average molecular weight of the compound (B) is 100 to 10,000, and the number average molecular weight is a number average molecular weight in terms of polymethyl methacrylate measured through gel permeation chromatography.

One embodiment of the present disclosure relates to an antifouling agent composition which contains a compound (A) having a silyl group and a fluorinated alkyl group and a compound (B) having a silyl group at at least one end of a molecular chain, wherein the number average molecular weight of the compound (A) is 100 to 10,000, the number average molecular weight of the compound (B) is 100 to 10,000, and the number average molecular weight is a number average molecular weight in terms of polymethyl methacrylate measured through gel permeation chromatography.

One embodiment of the present disclosure relates to a method of producing a spectacle lens including a process of forming an antifouling layer on a spectacle lens using an antifouling agent composition containing a compound (A) having a silyl group and a fluorinated alkyl group and a compound (B) having a silyl group at at least one end of a molecular chain, wherein the number average molecular weight of the compound (A) is 100 to 10,000, the number average molecular weight of the compound (B) is 100 to 10,000, and the number average molecular weight is a number average molecular weight in terms of polymethyl methacrylate measured through gel permeation chromatography.

[Brief Description of Drawings]

[Fig. 1]

Fig. 1 is a schematic cross-sectional view of a spectacle lens 1 of the present embodiment.

[Description of Embodiments]

Hereinafter, embodiments according to the present disclosure will be described in detail, but the present disclosure is not limited thereto, and various modifications can be made without departing from the spirit and scope of the present disclosure. In this specification, when a numerical range is indicated using "to," it means that numerical values stated before and after "to" are included as a minimum value and a maximum value.

Here, when a component having a silyl group is contained, the content of each component in the antifouling agent composition is a value calculated when the silyl group is a trimethoxysilyl group.

[First Embodiment]

First, a first embodiment of the present disclosure will be described.

The spectacle lens having the antifouling layer disclosed in PTL 1 has high water repellency, and it is easy to wipe off surface deposits such as fingerprints therefrom. On the other hand, when the water repellency is improved, the surface is more susceptible to scratches, and there is a problem regarding abrasion resistance.

The first embodiment of the present disclosure relates to a spectacle lens having both excellent water repellency and abrasion resistance.

The inventors have found that, when a spectacle lens has an antifouling layer including a condensed structure of a fluorinated alkyl group and a silyl group on its outermost surface, and the contact angle $\theta_A$ and the withstand load T of the antifouling layer are a predetermined value or more, the spectacle lens having both excellent water repellency and abrasion resistance is obtained.

A spectacle lens of the first embodiment relates to a spectacle lens comprising, an antifouling layer including a condensed structure of a fluorinated alkyl group and a silyl group on an outermost surface thereof, wherein a contact angle $\theta_A$ of a surface of the antifouling layer with respect to water is 108° or more, and the withstand load T is 3.5 kg or more in a withstand load test below.

<Withstand Load Test>

The surface of the spectacle lens is wiped off with acetone to remove grease, dirt and the like. In a reciprocating friction and wear tester (commercially available from Shinto Scientific Co., Ltd.), using steel wool (Bonstar #0000, commercially available from Nihon Steel Wool Co., Ltd.) cut into 70×18 mm strips and wrapped around an eraser, a convex surface of the spectacle lens is rubbed back and forth 20 times with a load of 2.5 kg, a load of 3.0 kg, a load of 3.5 kg, and a load of 4.0 kg, increasing in 0.5 kg increments. Then, the surface of the spectacle lens is wiped off with acetone again, and then exposed to light from a fluorescent lamp, and the reflected light is used to visually check whether there are peeled-off film scratches according to a linear peeled off film in a length of about 5 mm. The test is performed at three locations per spectacle lens, a spectacle lens with one or fewer peeled-off film locations is determined to be satisfactory, a spectacle lens with two or more peeled-off film locations is determined to be unsatisfactory, and the load that is one level lighter than the load when it is determined to be unsatisfactory is recorded as the withstand load. The withstand load of five spectacle lenses is evaluated in the same manner and the average value is taken as the withstand load T.

The spectacle lens of the first embodiment has both excellent water repellency and abrasion resistance. Although the reason why this effect is obtained is unclear, it is thought that, according to the present embodiment, when the contact angle $\theta_A$ is set to a predetermined value or more, and the withstand load is set to a predetermined value or more, significantly higher abrasion resistance can be obtained due to their synergistic effect. When the contact angle $\theta_A$ is set to 108° or more, it is possible to improve the slipperiness of the outermost surface. Moreover, since the withstand load of the antifouling layer is increased, for example, an article that comes into contact with the spectacle lens is less likely to slip on the surface of the antifouling layer and to create a catch that could damage the surface film. Moreover, when the withstand load is increased, it is possible to prevent damage due to a localized load and prevent deterioration of the antifouling layer. It is speculated that high abrasion resistance is obtained for the above reasons. However, the mechanism is not limited thereto.

[Second Embodiment]

Next, a second embodiment of the present disclosure will be described.

The spectacle lens having the antifouling layer disclosed in PTL 1 has high water repellency, and it is easy to wipe off surface deposits such as fingerprints therefrom. On the other hand, the surface is easily scratched when a strong load is applied, and there is a need to improve the load resistance.

The second embodiment of the present disclosure relates to a spectacle lens having both excellent water repellency and load resistance, an antifouling agent composition, and a method of producing a spectacle lens.

The inventors have found that, when an antifouling layer having a group represented by the following Formula (1a) is provided and the value LA reflecting the length of the group is within a predetermined range, a spectacle lens having both excellent water repellency and load resistance is obtained.

A spectacle lens of the second embodiment has an antifouling layer containing a group represented by Formula (1a) :

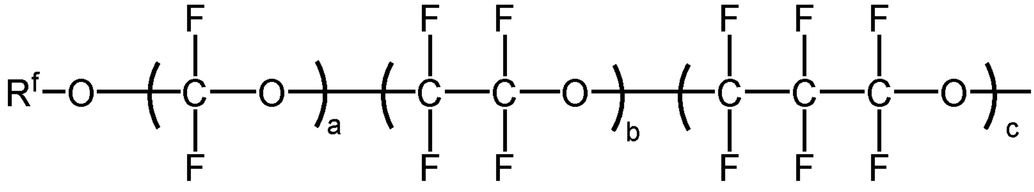

(1a)

(in the formula, $R^f$ is a fluorinated alkyl group having 1 to 20 carbon atoms, a is 0 to 100, b is 0 to 100, c is 0 to 100, and a+b+c is 10 to 200),
wherein, when the number of carbon atoms for $R^f$ in Formula (1a) is k, a value LA of [k+2×a+3×b+4×c] is 30 to 200.
According to the spectacle lens of the second embodiment, both water repellency and load resistance are excellent. Here, the spectacle lens of the present embodiment also has excellent abrasion resistance. Although the reason why this effect is obtained is unclear, it is speculated that, when the antifouling layer has a group represented by Formula (1a), and the number of carbon atoms for $R^f$ in Formula (1a) is k, if the value LA of [k+2×a+3×b+4×c] is within a predetermined range, this contributes to water repellency, the surface is made more slippery and is less likely to be scratched by an external contact object, and the load resistance is improved. However, the mechanism is not limited thereto.

[Third Embodiment]

Next, a third embodiment of the present disclosure will be described.
The spectacle lens having the antifouling layer disclosed in PTL 1 has high water repellency, and it is easy to wipe off surface deposits such as fingerprints therefrom. On the other hand, regarding increasing the water repellency, when friction is repeatedly applied, such as wiping off dirt from the surface, since the water repellency decreases, there is a problem regarding water repellency durability. On the other hand, when the water repellency durability is increased, the surface is easily scratched when a strong load is applied, and there is a need to improve the load resistance.
The third embodiment of the present disclosure relates to a spectacle lens having both excellent withstand load and water repellency durability, an antifouling agent composition, and a method of producing a spectacle lens.
The inventors have found that, when a compound (A) having a silyl group and a fluorinated alkyl group and a compound (B) having silyl groups at both ends of a molecular chain are contained, a spectacle lens having both excellent withstand load and water repellency durability is obtained.
A spectacle lens of the third embodiment relates to a spectacle lens having an antifouling layer which is a condensation product of an antifouling agent composition containing a compound (A) having at least one silyl group and a fluorinated alkyl group and a compound (B) having silyl groups at both ends of a molecular chain.
According to the spectacle lens of the third embodiment, both withstand load and water repellency durability are excellent. Although the reason why this effect is obtained is unclear, it is speculated that, when the antifouling layer contains a compound (A) having at least one silyl group and a fluorinated alkyl group, it is possible to improve the withstand load, and when the antifouling layer contains a compound (B) having silyl groups at both ends of a molecular chain, it is possible to improve the water repellency durability without impairing the withstand load. However, the mechanism is not limited thereto.

[Fourth Embodiment]

Next, a fourth embodiment of the present disclosure will be described.
The spectacle lens having the antifouling layer disclosed in PTL 1 has high water repellency, and it is easy to wipe off surface deposits such as fingerprints therefrom. On the other hand, regarding increasing the water repellency, when friction is repeatedly applied, such as wiping off dirt from the surface, since the water repellency decreases, there is a problem regarding water repellency durability. On the other hand, when the water repellency durability is increased, the surface is easily scratched when a strong load is applied, and there is a need to improve the load resistance.
The fourth embodiment of the present disclosure relates to a spectacle lens having both excellent withstand load and water repellency durability, an antifouling agent composition, and a method of producing a spectacle lens.
The inventors have found that, when a compound (A) having a predetermined number average molecular weight and having a silyl group and a fluorinated alkyl group and a compound (B) having a predetermined number average molecular weight and having a silyl group at at least one end of a molecular chain are contained, a spectacle lens having both excellent withstand load and water repellency durability is obtained.
A spectacle lens of the fourth embodiment relates to a spectacle lens having an antifouling layer which is a condensation product of an antifouling agent composition containing a compound (A) having a silyl group and a fluorinated alkyl group and a compound (B) having a silyl group at at least one end of a molecular chain,
wherein the number average molecular weight of the compound (A) is 100 to 10,000, the number average molecular weight of the compound (B) is 100 to 10,000, and the number average molecular weight is a number average molecular weight in terms of polymethyl methacrylate measured through gel permeation chromatography.
According to the spectacle lens of the fourth embodiment, both withstand load and water repellency durability are excellent. Although the reason why this effect is obtained is unclear, it is speculated that, when the antifouling layer contains a compound (A) having a silyl group and a fluorinated alkyl group, it is possible to improve the withstand load, when the antifouling layer contains a compound (B) having a silyl group at at least one end of a molecular chain, it is

possible to improve the water repellency durability, and when the number average molecular weight of the compound (A) is 100 to 10,000, and the number average molecular weight of the compound (B) is 100 to 10,000, the molecular chains of the compound (A) and the compound (B) can be mutually diffused and mixed together in such a manner that respective effects are not impaired. However, the mechanism is not limited thereto.

Hereinafter, the embodiments will be described.

[Spectacle Lens]

Fig. 1 is a schematic cross-sectional view of a spectacle lens 1 of the present embodiment. The spectacle lens 1 of the present embodiment includes a lens substrate 11, a hard coat layer 21f provided on the side of an object-side surface 11a of the lens substrate 11, a functional layer 31f provided on the side of an object-side surface 21fa of the hard coat layer 21f, and an antifouling layer 41f provided on the side of an object-side surface 31fa of the functional layer 31f.

When the lens substrate 11 is a finished lens, the spectacle lens 1 of the present embodiment further includes a hard coat layer 21b provided on the side of an eyeball-side surface 11b of the lens substrate 11, a functional layer 31b provided on the side of an eyeball-side surface 21bb of the hard coat layer 21b, and an antifouling layer 41b provided on the side of an eyeball-side surface 31bb of the functional layer 31b.

Here, although not shown, a foundation layer may be provided between the lens substrate 11 and the hard coat layer 21f or between the lens substrate 11 and the hard coat layer 21b.

Hereinafter, the layers in the spectacle lens of the present embodiment will be described.

<Antifouling Layer>

In the first embodiment, the contact angle $\theta_A$ of the surface of the antifouling layer with respect to water is 108° or more, and the withstand load T in the following withstand load test is 3.5 kg or more. With such a configuration, a spectacle lens having both excellent water repellency and abrasion resistance is obtained. Here, the antifouling layer of the first embodiment may have features of an antifouling layer of the second embodiment to be described below.

(Contact Angle $\theta_A$)

The contact angle $\theta_A$ is preferably 109° or more, and more preferably 110° or more. The upper limit of the contact angle $\theta_A$ is not particularly limited, and may be, for example, 120° or less.

The contact angle $\theta_A$ is measured by a contact angle measurement method described in examples. In addition, the contact angle $\theta_A$ can be set to be within the above range, for example, by using a compound A to be described below.

(Withstand Load T)

The withstand load T is preferably 3.5 kg or more, more preferably 3.8 kg or more, and still more preferably 4.9 kg or more. The upper limit of the withstand load T is not particularly limited, and may be, for example, 60 kg or less.

The withstand load T is measured by the following method, and more specifically, measured by the method described in examples. In addition, the withstand load T can be set to be within the above range, for example, by using a compound A to be described below.

<Withstand Load Test>

The surface of the spectacle lens is wiped off with acetone to remove grease, dirt and the like. In a reciprocating friction and wear tester (commercially available from Shinto Scientific Co., Ltd.), using steel wool (Bonstar #0000, commercially available from Nihon Steel Wool Co., Ltd.) cut into 70×18 mm strips and wrapped around an eraser, a convex surface of the spectacle lens is rubbed back and forth 20 times with a load of 2.5 kg, a load of 3.0 kg, a load of 3.5 kg, and a load of 4.0 kg, increasing in 0.5 kg increments. Then, the surface of the spectacle lens is wiped off with acetone again, and then exposed to light from a fluorescent lamp, and the reflected light is used to visually check whether there are peeled-off film scratches according to a linear peeled off film in a length of about 5 mm. The test is performed at three locations per spectacle lens, a spectacle lens with one or fewer peeled-off film locations is determined to be satisfactory, a spectacle lens with two or more peeled-off film locations is determined to be unsatisfactory, and the load that is one level lighter than the load when it is determined to be unsatisfactory is recorded as the withstand load. The withstand load of five spectacle lenses is evaluated in the same manner and the average value is taken as the withstand load T.

(Contact Angle $\theta_B$)

For the antifouling layer, after a wiping test is performed 5,000 times with a load of 2 kg, the contact angle $\theta_B$ of the surface of the antifouling layer with respect to water is preferably 108° or more, and more preferably 109° or more. Within the above range, it is possible to further improve the abrasion resistance of the spectacle lens.

The wiping test of 5,000 times with a load of 2 kg is performed by a method described in examples to be described below. In addition, the contact angle $\theta_B$ is measured by a contact angle measurement method described in examples. In addition, the contact angle $\theta_B$ can be set to be within the above range, for example, by using the above compound A, and additionally using a compound B to be described below.

$\theta_B/\theta_A$ is preferably 0.95 or more, more preferably 0.96 to 1.00, and still more preferably 0.97 to 1.00. Within the above range, it is possible to further improve the abrasion resistance of the spectacle lens.

In the second embodiment, the antifouling layer has a group represented by Formula (1a):

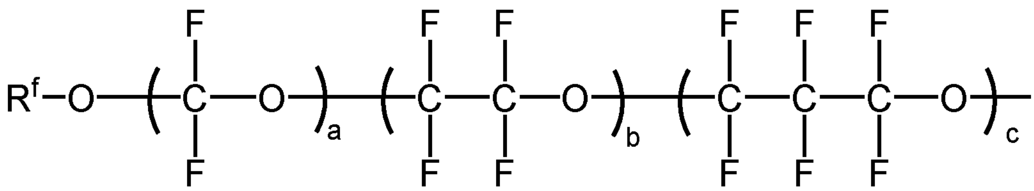 ( 1a )

(in the formula, $R^f$ is a fluorinated alkyl group having 1 to 20 carbon atoms, a is 0 to 100, b is 0 to 100, c is 0 to 100, and a+b+c is 10 to 200). When the number of carbon atoms for $R^f$ in Formula (1a) is k, the value LA of [$k+2\times a+3\times b+4\times c$] is 30 to 200. When the antifouling layer has a group represented by Formula (1a) in which LA is within this range, a spectacle lens having both excellent water repellency and load resistance is obtained, and additionally, a spectacle lens also having excellent abrasion resistance is obtained.

The antifouling layer of the second embodiment may have features of the antifouling layer of the first embodiment described above.

In order to further improve the water repellency, load resistance and abrasion resistance, LA is preferably 40 to 150, more preferably 50 to 120, and still more preferably 50 to 100.

Here, in the above Formula (1a), the arrangement of repeating units a, b and c, each indicating the number of units, is random or in blocks.

a is preferably 1 to 50, more preferably 3 to 40, and still more preferably 5 to 30, and
b is preferably 1 to 50, more preferably 3 to 40, and still more preferably 5 to 30.
c is preferably 0 to 50, more preferably 0 to 30, and still more preferably 0 to 20.
a+b+c is preferably 10 to 100, more preferably 15 to 70, and still more preferably 20 to 50.

Examples of fluorinated alkyl groups for $R^f$ include a perfluoromethyl group, a perfluoropropyl group, a perfluorohexyl group, and a perfluorododecyl group.

An example of a method of introducing a group represented by Formula (1a) into an antifouling layer include forming an antifouling layer using an antifouling agent composition containing a compound (A) to be described below.

The antifouling layer has a group represented by Formula (2a) :

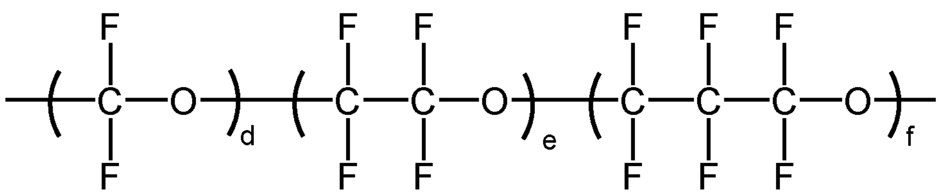 ( 2a )

(in the formula, d is 0 to 100, e is 0 to 100, f is 0 to 100, and d+e+f is 10 to 200), and the value LB of [$2\times d+3\times e+4\times f$] in Formula (2a) is preferably 30 to 500. When the antifouling layer has a group represented by Formula (2a) in which LB is within this range, it is possible to further improve the water repellency and water repellency durability of the spectacle lens. The group represented by Formula (2a) can contribute to formation of an antifouling layer film and increase the water repellency durability. The surface of the antifouling layer has a problem regarding water repellency durability in that the water repellency decreases when the friction is repeatedly applied, such as wiping off dirt. However, when the group represented by Formula (2a) is introduced, excellent water repellency durability is obtained.

In order to further improve the water repellency and load resistance, LB is preferably 40 to 400, more preferably

50 to 300, and still more preferably 60 to 200.

Here, in the above Formula (2a), the arrangement of repeating units d, e and f, each indicating the number of units, is random or in blocks.

d is preferably 1 to 80, more preferably 3 to 70, and still more preferably 5 to 50, and
e is preferably 1 to 80, more preferably 3 to 70, and still more preferably 5 to 50.
f is preferably 0 to 50, more preferably 0 to 30, and still more preferably 0 to 20.
d+e+f is preferably 10 to 200, more preferably 20 to 150, and still more preferably 30 to 100.

The numbers of repeating units in the group represented by the above Formula (1a) and the group represented by Formula (2a) are values determined from the mass/z measured through matrix-assisted laser desorption/ionization mass spectrometry (MALDI-MS), and more specifically, values obtained by a measurement method described in examples.

An example of a method of introducing a group represented by Formula (2a) into an antifouling layer include forming an antifouling layer using an antifouling agent composition containing a compound (B) to be described below.

LA/LB is preferably **0.2 to 2.0.** When LA/LB is within the above range, it is possible to further improve the water repellency durability of the spectacle lens. It is thought that the group represented by Formula (1a) and the group represented by Formula (2a) have approximately the same length, a dense antifouling layer is easily formed, and the water repellency durability can be further improved.

In order to further improve the water repellency durability, LA/LB is preferably **0.3 to 1.5,** more preferably **0.4 to 1.2,** still more preferably 0.5 to 1.0, and yet more preferably **0.6 to 0.9.**

When the antifouling layer has a group represented by Formula (1a) and a group represented by Formula (2a), in order to further improve the water repellency and water repellency durability in the antifouling layer, the molar ratio [(1a)/(2a)] of the group represented by Formula (1a) to the group represented by Formula (2a) is preferably 0.01 to 10, more preferably 0.1 to 5, and still more preferably 0.2 to **3.**

The antifouling layer may be a condensation product of an antifouling agent composition to be described below. The condensation product is a product in which at least a part of the antifouling agent composition is condensed. The antifouling layer may be formed on a hard coat layer or may be formed on a functional layer, and preferably, it is preferably formed on the antireflection layer. Thus, preferably, the antifouling layer is preferably positioned on the outermost surface.

The antifouling layer may be a condensation product of an antifouling agent composition containing a compound (A) having a silyl group and a fluorinated alkyl group and a compound (B) having a silyl group at at least one end of a molecular chain. The antifouling layer is a condensation product of an antifouling agent composition to be described below, and the condensation product is a product in which at least a part of the antifouling agent composition is condensed. The antifouling layer may be formed on a hard coat layer or may be formed on a functional layer, and preferably, it is preferably formed on the antireflection layer. Thus, preferably, the antifouling layer is preferably positioned on the outermost surface.

(Antifouling Agent Composition)

The antifouling agent composition contains a compound (A) having a silyl group and a fluorinated alkyl group and a compound (B) having a silyl group at at least one end of a molecular chain.

The antifouling agent composition may contain a compound (A) having at least one silyl group and a fluorinated alkyl group and a compound (B) having silyl groups at both ends of a molecular chain. In addition, the antifouling agent composition preferably contains a compound (A) having a group represented by Formula (1a) and at least one silyl group, and a compound (B) having a group represented by Formula (2a) and silyl groups at both ends of a molecular chain.

The antifouling layer is a condensation product of an antifouling agent composition containing a compound (A) having at least one silyl group and a fluorinated alkyl group and a compound (B) having silyl groups at both ends of a molecular chain, and thus a spectacle lens having both excellent withstand load and water repellency durability is obtained.

The antifouling agent composition preferably contains a compound (A) having a silyl group and a fluorinated alkyl group, and a compound (B) having a silyl group at at least one end of a molecular chain, wherein the number average molecular weight of the compound (A) is 100 to 10,000, the number average molecular weight of the compound (B) is 100 to 10,000, and the number average molecular weight is a number average molecular weight in terms of polymethyl methacrylate measured through gel permeation chromatography.

When the antifouling layer is a condensation product of the above antifouling agent composition, a spectacle lens having both excellent withstand load and water repellency durability is obtained.

(Compound (A))

When the compound (A) has a silyl group, a condensation reaction proceeds during deposition and an antifouling

layer is formed. Examples of silyl groups include trialkoxysilyl groups such as a trimethoxysilyl group, triethoxysilyl group, tripropyloxysilyl group, and trihexyloxysilyl group. The compound (A) preferably has a silyl group at the molecular end.

When the compound (A) has a fluorinated alkyl group, it is possible to improve the water repellency of the antifouling layer. When the antifouling agent composition contains the compound (A) having at least one silyl group and a fluorinated alkyl group, it is possible to improve the water repellency, load resistance and abrasion resistance of the formed antifouling layer. Examples of fluorinated alkyl groups include a perfluoroalkyl group. The number of carbon atoms in the fluorinated alkyl group is preferably 1 to 20, more preferably 1 to 10, and still more preferably 1 to **3.** The compound (A) preferably has a fluorinated alkyl group at the molecular end.

In order to further improve the water repellency and abrasion resistance of the antifouling layer, the compound (A) preferably has a poly(fluorinated alkyleneoxy) fluorinated alkyl ether group, and more preferably a group represented by the following Formula (1a).

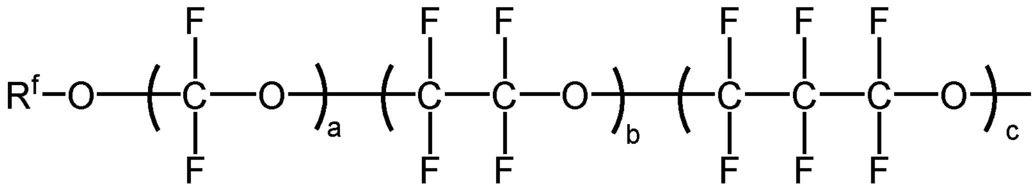
(1a)

(in Formula (1a), $R^f$ is a fluorinated alkyl group having 1 to 20 carbon atoms, a is 0 to 100, b is 0 to 100, c is 0 to 100, and a+b+c is 10 to 200).

Here, in the above Formula (1a), the arrangement of repeating units a, b and c, each indicating the number of units, is random or in blocks.

a is preferably 1 to 50, more preferably 3 to 40, and still more preferably 5 to 30, and,
b is preferably 1 to 50, more preferably 3 to 40, and still more preferably 5 to 30.
c is preferably 0 to 50, more preferably 0 to 30, and still more preferably 0 to 20.
a+b+c is preferably 10 to 100, more preferably 15 to 70, and still more preferably 20 to 50.

Examples of fluorinated alkyl groups for $R^f$ include a perfluoromethyl group, a perfluoropropyl group, a perfluorohexyl group, and a perfluorododecyl group.

An example of a method of introducing a group represented by Formula (1a) into an antifouling layer include forming an antifouling layer using an antifouling agent composition containing a compound (A) to be described below.

In order to further improve the water repellency and abrasion resistance, the number average molecular weight of the compound (A) is 100 to 10,000, preferably 400 to 2,000, more preferably 500 to 1,500, and still more preferably 600 to 1,000.

In addition, in order to further improve the water repellency and abrasion resistance, the molecular weight distribution (Mw/Mn) of the compound (A) is preferably 1.0 to 1.2, and more preferably 1.0 to 1.1.

In addition, in order to further improve the withstand load of the antifouling layer, the ratio (Mz/Mw) of the z average molecular weight (Mz) to the weight average molecular weight (Mw) of the compound (A) is 1.0 to **1.2,** and more preferably 1.0 to 1.1.

The number average molecular weight of the compound (A) and the molecular weight distribution are determined from the number average molecular weight and weight average molecular weight in terms of polymethyl methacrylate, which are measured through gel permeation chromatography.

Here, the number average molecular weight, the weight average molecular weight, the z average molecular weight, the molecular weight distribution (Mw/Mn), and the ratio (Mz/Mw) of the z average molecular weight (Mz) to the weight average molecular weight (Mw) in the present embodiment are each based on the molecular weight in terms of polymethyl methacrylate measured through gel permeation chromatography, and are values measured based on the following sample preparation conditions and measurement conditions. The same applies to the number average molecular weight, the weight average molecular weight, the z average molecular weight, molecular weight distribution (Mw/Mn), and the ratio (Mz/Mw) of the z average molecular weight (Mz) to the weight average molecular weight (Mw) of the compound (B) to be described below.

Here, the z average molecular weight is the average molecular weight defined by the following Formula (11).

$$\text{z average molecular weight} = \Sigma niMi^3 / \Sigma niMi^2 \qquad (11)$$

[in Formula (11), Mi is the molecular weight of a component i in the compound, and ni is the molar fraction of the component i].

<Sample Preparation Conditions>

5 mL of a measurement solvent to be described below is added to 3 mg of the residue sample dehydrated under a nitrogen stream, and the mixture is slowly stirred at room temperature. After it is visually confirmed that the sample is dissolved, the sample is prepared by performing filtration using a 0.45 $\mu$m filter. The measurement sample is measured through gel permeation chromatography under the following conditions.

<Measurement Conditions>

Device: gel permeation chromatography GPC
Detector: differential refractive index (RI) detector (RI-504, sensitivity 32, commercially available from Showa Denko K.K.)
Column: Shodex HFIP-G 1 column (6.0 mm×5 cm, commercially available from Showa Denko K.K.), Shodex HFIP-606M 2 columns (6.0 mm×15 cm, commercially available from Showa Denko K.K.)
Solvent: hexafluoroisopropanol with 5 mM sodium trifluoroacetate
Flow rate: 0.2 mL/min
Column temperature: 40°C
Injection volume: 0.020 mL
Standard sample: monodisperse polymethyl methacrylate (PMMA) (commercially available from Showa Denko **K.K.)**

Here, the molecular weight in terms of polymethyl methacrylate measured through gel permeation chromatography in the present embodiment does not necessarily have to match the molecular weight obtained by other calculation methods. Other calculation methods include, but are not particularly limited to, for example, methods of calculating through matrix-assisted laser desorption/ionization mass spectrometry (MALDI-MS) and nuclear magnetic resonance (NMR) used in examples to be described below.

In order to improve the water repellency and abrasion resistance of the antifouling layer, the content of the compound (A) with respect to the solid content of the antifouling agent composition is preferably 5 mass% to 100 mass%, more preferably 5 mass% to 95 mass%, still more preferably 7 mass% to 80 mass%, yet more preferably 10 mass% to 50 mass%, yet more preferably 10 mass% to 40 mass%, and particularly preferably 15 mass% to 30 mass%.

(Compound (B))

When the antifouling agent composition contains a compound (B) having a silyl group at at least one end of a molecular chain (hereinafter simply referred to as a "compound (B)"), it is possible to improve the water repellency durability of the formed antifouling layer.

The compound (B) preferably has silyl groups at both ends of a molecular chain. When the antifouling agent composition contains the compound (B) having silyl groups at both ends of a molecular chain, the formed antifouling layer has high water repellency, and can have improved water repellency durability. When the compound (B) has silyl groups at both ends of a molecular chain, a condensation reaction proceeds, and an antifouling layer is formed. Examples of silyl groups include trialkoxysilyl groups such as a trimethoxysilyl group, triethoxysilyl group, tripropyloxysilyl group, and trihexyloxysilyl group.

The number average molecular weight of the compound (B) is 100 to 10,000, and in order to further improve the water repellency and water repellency durability, it is preferably 400 to 2,000, more preferably 500 to 1,500, still more preferably 600 to 1,200, and yet more preferably 800 to 1,000.

In addition, in consideration of the water repellency and water repellency durability, the molecular weight distribution (Mw/Mn) of the compound (B) is preferably 1.0 to 1.2, and more preferably 1.0 to 1.1.

In addition, in order to further improve the water repellency durability of the antifouling layer, the ratio of the number average molecular weight of the compound (A) to the number average molecular weight of the compound (B) (the number average molecular weight of the compound (A)/the number average molecular weight of the compound (B)) is preferably 0.1 to 100, more preferably 0.1 to 10, still more preferably 0.2 to 5.0, and particularly preferably 0.5 to 1.5.

In order to further improve the water repellency and water repellency durability of the antifouling layer, the compound (B) is preferably linear. In addition, the compound (B) preferably has a fluorinated alkylene framework and more preferably has a group represented by Formula (2a).

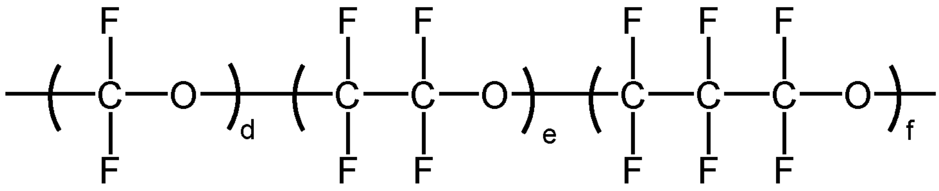 (2a)

(in Formula (2a), d is 0 to 100, e is 0 to 100, f is 0 to 100, and d+e+f is 10 to 200)

In the above Formula (2a), the arrangement of repeating units d, e and f, each indicating the number of units, is random or in blocks.

d is preferably 1 to 80, more preferably 3 to 70, and still more preferably 5 to 50.

e is preferably 1 to 80, more preferably 3 to 70, and still more preferably 5 to 50.

f is preferably 0 to 50, more preferably 0 to 30, and still more preferably 0 to 20.

d+e+f is preferably 10 to 200, more preferably 20 to 150, and still more preferably 30 to 100.

In order to further improve the water repellency durability of the antifouling layer, the content of the compound (B) with respect to the solid content of the antifouling agent composition is preferably 0 mass% to 95 mass%, more preferably 5 mass% to 95 mass%, still more preferably 30 mass% to 90 mass%, and yet more preferably 50 to 90 mass%.

The mass ratio of the contents of the compound (A) and the compound (B) (compound (A)/compound (B)) in the antifouling agent composition is preferably 0.01 to 10, more preferably 0.05 to 5.0, and still more preferably 0.1 to 1.0 in order to further improve the water repellency durability of the antifouling layer.

(Method of Producing Spectacle Lens-Formation of Antifouling Layer-)

A method of producing a spectacle lens according to the present embodiment includes a process of forming an antifouling layer on a spectacle lens using an antifouling agent composition containing a compound (A) and a compound (B). The antifouling layer is obtained by depositing or applying, for example, an antifouling agent composition, but is preferably obtained by deposition. Here, the compound (A) preferably has at least one silyl group and a fluorinated alkyl group and is preferably the above compound (A). The compound (B) preferably has silyl groups at both ends of a molecular chain and is preferably the above compound (B).

Preferably, the method of producing a spectacle lens according to the present embodiment includes a process of forming an antifouling layer on a spectacle lens using an antifouling agent composition containing a compound (A) having a silyl group and a fluorinated alkyl group and a compound (B) having a silyl group at at least one end of a molecular chain, wherein the number average molecular weight of the compound (A) is 100 to 10,000, the number average molecular weight of the compound (B) is 100 to 10,000, and the number average molecular weight is a number average molecular weight in terms of polymethyl methacrylate measured through gel permeation chromatography.
The antifouling layer is obtained by depositing or applying, for example, an antifouling agent composition, but is preferably obtained by deposition.

The deposition is performed by, for example, vacuum deposition. In the vacuum deposition, the heating temperature during deposition is preferably 400°C or higher, more preferably 550°C or higher, still more preferably 600°C or higher, and yet more preferably 650°C or higher. The heating temperature in deposition refers to the temperature at which pellets and the like impregnated with the antifouling agent composition are heated during deposition. The heating temperature in vacuum deposition is 400°C or higher, preferably, for example, in a range of 400°C to 1,000°C. Here, the vacuum deposition is preferably performed in a deposition space controlled to a degree of vacuum of $3.0\times10^{-2}$ Pa or less.

Heating in deposition can be performed using, for example, a halogen heater, resistance heat, an electron gun or the like, and among these, when an electron gun is used to perform heating and deposition, a thin film with favorable accuracy can be formed. The power of the electron gun varies depending on the substance used, the deposition device, the degree of vacuum, and the irradiation area, and preferable conditions are an acceleration voltage of about 6 kV and an applied current of about 5 mA to 40 mA.

For example, the deposition time is preferably within 1,000 seconds, and more preferably 800 seconds or 600 seconds. When deposition is performed for such a time, even if a water-repellent material containing a plurality of components with slightly different deposition start temperatures is used, the components can be deposited almost simultaneously, and a uniform film can be obtained.

The deposition is preferably performed using a porous material impregnated with the antifouling agent composition.

As the porous material, it is preferable to use a fused silica porous component or a sintered filter obtained by sintering a metal powder having high thermal conductivity such as copper or stainless steel. In order to obtain an appropriate deposition rate, the mesh of the sintered filter is suitably set to 40 μm to 200 μm, and preferably 80 μm to 120 μm.

In addition, pellets filled with steel wool in a copper container are also preferably used.

The antifouling agent composition may be used directly or in the form of a solution by impregnating a porous material.

In order to form an antifouling layer on a spectacle lens by coating, a method of dissolving a fluorine-containing silane compound in an organic solvent and applying it to the surface of the spectacle lens can be used.

As the coating method, a dipping method, a spin coating method, a spray method, a flow method, a doctor blade method, roll coat painting, gravure coat painting, curtain flow painting or the like is used.

After the antifouling layer is formed, a heating process may be performed. In the heating process, a reaction between the antifouling agent composition and the surface of the spectacle lens proceeds. When the heat treatment is performed, it is possible to minimize a decrease in water repellency caused by physical and chemical stress during daily use, such as wiping the surface of the spectacle lens and adhesion of the detergent and it is possible to increase the durability.

The temperature in the heat treatment is preferably 40°C to 90°C, more preferably 50°C to 80°C°, and still more preferably 55°C to 70°C.

The time for the heat treatment is not particularly limited, and is, for example, 0.5 hours to 10 hours.

The thickness of the antifouling layer is preferably 1 nm to 5 μm, more preferably 1 nm to 100 nm, and still more preferably 2 nm to 10 nm.

Next, each configuration of the spectacle lens of the embodiment will be described.

<Lens Substrate>

The lens substrate may be either a finished lens or a semi-finished lens.

The surface shape of the lens substrate is not particularly limited, and may be flat, convex, concave or the like.

The lens substrate may be used for any application such as a single focal lens, a multifocal lens, and a progressive power lens. For example, as one example, for a progressive power lens, usually, a near portion region (near portion) and a progressive portion region (intermediate region) are included in the above lower region, and a distance portion region (distance portion) is included in an upper region.

As the lens substrate, a colorless lens substrate is usually used, but a lens substrate that is colored in a range in which the transparency is not impaired can also be used.

The lens substrate is preferably of a meniscus type. When the meniscus type lens substrate contains the above Compound 1, it is possible to reduce astigmatism.

The optical center thickness of the lens substrate is not particularly limited, and is preferably 0.5 mm to 5.0 mm, more preferably 0.5 mm to 3.0 mm, and still more preferably 0.5 mm to 2.0 mm.

The diameter of the lens substrate is not particularly limited, and is usually about 50 mm to 100 mm.

The refractive index ne of the lens substrate is preferably 1.53 or more, more preferably 1.55 or more, and still more preferably 1.60 or more.

Here, the upper limit of the refractive index ne of the lens substrate is not particularly limited, and may be, for example, 1.80 or less.

Examples of resins for lens substrates include urethane resins, episulfide resins, polycarbonate resins, and acrylic resins.

The resin is preferably at least one selected from among polythiourethane resins, polysulfide resins, and polyurethane resins, and more preferably at least one selected from the group consisting of polythiourethane resins and polysulfide resins.

(Method of Producing Lens Substrate)

Although not particularly limited, the lens substrate can be obtained by, for example, a production method including a process of curing the above polymerizable composition and a process of annealing the cured resin.

The polymerization is preferably a cast polymerization method. For example, the lens substrate can be obtained by injecting a polymerizable composition into a mold in which a glass or metal mold and a tape or a gasket are combined and performing polymerization.

Polymerization conditions can be appropriately set according to the polymerizable composition. The polymerization start temperature is preferably 0°C or higher, more preferably 10°C or higher, and preferably 50°C or lower, and more preferably 40°C or lower. Preferably, the temperature is raised from the polymerization start temperature, and curing by heating is then performed. For example, the maximum heating temperature is usually 110°C or higher and 130°C or lower.

After polymerization is completed, the lens substrate may be released from the mold and subjected to an annealing treatment. The temperature in the annealing treatment is preferably 100 to 150°C.

<Hard Coat Layer>

The hard coat layer is, for example, a cured film formed of a curable composition containing an inorganic oxide and a silicon compound. The curable composition preferably further contains a polyfunctional epoxy compound.

Examples of inorganic oxides include silicon oxide, aluminum oxide, titanium oxide, zirconium oxide, tungsten oxide, zinc oxide, tin oxide, beryllium oxide, antimony oxide, and composite oxides formed of two or more of these inorganic oxides. These may be used alone or two or more thereof may be used in combination. Among these inorganic oxides, silicon oxide is preferable. Here, colloidal silica may be used as the inorganic oxide.

The content of the inorganic oxide in the solid content of the curable composition, preferably 20 mass% or more and 80 mass% or less, more preferably 25 mass% or more and 70 mass% or less, and still more preferably 25 mass% or more and 50 mass% or less.

The silicon compound is, for example, a silicon compound having a hydrolyzable group such as an alkoxy group. The silicon compound is preferably a silane coupling agent containing an organic group and a hydrolyzable group bonded to silicon atoms. The organic group bonded to silicon atoms is preferably an organic group having a functional group, for example, an epoxy group such as a glycidoxy group, a vinyl group, a methacryloxy group, an acryloxy group, a mercapto group, an amino group, and a phenyl group, and more preferably an organic group having an epoxy group. Here, the silicon compound may have an alkyl group bonded to silicon.

Examples of commercial products of the above silane coupling agents include KBM-303, KBM-402, KBM-403, KBE-402, KBE-403, KBM-1403, KBM-502, KBM-503, KBE-502, KBE-503, KBM-5103, KBM-602, KBM-603, KBM-903, KBE-903, KBE-9103, KBM-573, KBM-575, KBM-9659, KBE-585, KBM-802, KBM-803, KBE-846, and KBE-9007 (product name, commercially available from Shin-Etsu Chemical Co., Ltd.).

The content of the silicon compound in the solid content of the curable composition is preferably 20 mass% to 90 mass%, more preferably 30 mass% to 75 mass%, and still more preferably 50 mass% to 75 mass%.

The polyfunctional epoxy compound is a polyfunctional epoxy compound containing two or more epoxy groups in one molecule, and more preferably a polyfunctional epoxy compound containing two or three epoxy groups in one molecule. Examples of commercial products of polyfunctional epoxy compounds include "Denacol" series EX-201, EX-211, EX-212, EX-252, EX-313, EX-314, EX-321, EX-411, EX-421, EX-512, EX-521, EX-611, EX-612, EX-614, and EX-614B (product name, commercially available from Nagase ChemteX Corporation).

The content of the polyfunctional epoxy compound in the solid content of the curable composition, preferably 0 mass% to 50 mass%, more preferably 10 mass% to 40 mass%, and still more preferably 15 mass% to 30 mass%.

The above curable composition can be prepared by mixing optional components such as an organic solvent, a leveling agent, and a curing catalyst as necessary in addition to the components described above.

The above hard coat layer can be formed by applying a curable composition to the substrate and performing a curing treatment (thermal curing, photocuring, etc.). As a method of applying a curable composition, commonly used methods such as a dipping method, a spin coating method, and a spray method can be applied. The curing treatment is usually performed by performing heating on a curable composition containing a polyfunctional epoxy compound. For example, the heat curing treatment can be performed by disposing the lens coated with the above curable composition under an environment of an atmospheric temperature of 50°C to 150°C for about 30 minutes to 3 hours.

<Foundation Layer>

For example, the above foundation layer can be formed from an aqueous resin composition containing at least one resin particle selected from the group consisting of a polyurethane resin, an acrylic resin, and an epoxy resin.

As the above aqueous resin composition, a commercially available aqueous polyurethane can be used without change or one that is diluted with an aqueous solvent as necessary can be used. Examples of commercially available aqueous polyurethanes include "Evafanol" series (product name, commercially available from Nicca Chemical Co., Ltd.), "SuperFlex" series (product name, commercially available from DKS Co., Ltd.), "Adeka Bontighter" series (product name, commercially available from ADEKA Corporation), "Olester" series (product name, commercially available from Mitsui Chemicals Inc), "Bondic" series and "Hydran" series (product name, commercially available from Dainippon Ink and Chemicals, Inc.), "Impranil" series (product name, commercially available from Bayer AG), "Soflanate" series (product name, commercially available from Japan Soflan Co., Ltd.), "Poiz" series (product name, commercially available from Kao Corporation), "Sanprene" series (product name, commercially available from Sanyo Chemical Industries, Ltd.), "Aizerax" series (product name, commercially available from Hodogaya Chemical Co., Ltd.), and "NeoRez" series (product name, commercially available from AstraZeneca).

The foundation layer can be formed, for example, by applying the above aqueous resin composition to the surface of the substrate and drying it.

<Functional Layer>

Examples of the above functional layers include an antireflection layer, a UV absorbing layer, an infrared light absorbing layer, a photochromic layer, an antistatic layer, and an anti-fogging layer. These functional layers may be used alone or two or more thereof may be used in combination. For these functional layers, known techniques related to spectacle lenses can be applied. Among these, it is preferable to have an antireflection layer.

(Antireflection Layer)

For example, the antireflection layer has low refractive index layers and high refractive index layers that are alternately arranged. The number of layers that the antireflection layer has is preferably 4 to 11 and more preferably 5 to 8.
The refractive index of the low refractive index layer is preferably 1.35 to 1.80, and more preferably 1.45 to 1.50 at a wavelength of 500 nm to 550 nm. The low refractive index layer is formed of an inorganic oxide and preferably formed of silicon oxide.
The refractive index of the high refractive index layer is preferably 1.90 to 2.60, and more preferably 2.00 to 2.40 at a wavelength of 500 nm to 550 nm, and the high refractive index layer is formed of, for example, an inorganic oxide. The inorganic oxide used for the high refractive index layer is preferably at least one selected from the group consisting of zirconium oxide, tantalum oxide, yttrium oxide, titanium oxide, niobium oxide and aluminum oxide, and more preferably at least one selected from the group consisting of zirconium oxide and tantalum oxide.
For the antireflection layer, low refractive index layers and high refractive index layers can be alternately laminated by a vacuum deposition method to form an antireflection layer.
As described above, the present disclosure provides a spectacle lens having both excellent water repellency and abrasion resistance, an antifouling agent composition, and a method of producing a spectacle lens.
Specifically, the following embodiments are disclosed.

<1> A spectacle lens comprising, an antifouling layer including a condensed structure of a fluorinated alkyl group and a silyl group on an outermost surface thereof,

wherein a contact angle $\theta_A$ of a surface of the antifouling layer with respect to water is 108° or more, and
a withstand load T is 3.5 kg or more in a withstand load test below.

<Withstand Load Test>

The surface of the spectacle lens is wiped off with acetone to remove grease, dirt and the like. In a reciprocating friction and wear tester (commercially available from Shinto Scientific Co., Ltd.), using steel wool (Bonstar #0000, commercially available from Nihon Steel Wool Co., Ltd.) cut into 70×18 mm strips and wrapped around an eraser, a convex surface of the spectacle lens is rubbed back and forth 20 times with a load of 2.5 kg, a load of 3.0 kg, a load of 3.5 kg, and a load of 4.0 kg, increasing in 0.5 kg increments. Then, the surface of the spectacle lens is wiped off with acetone again, and then exposed to light from a fluorescent lamp, and the reflected light is used to visually check whether there are peeled-off film scratches according to a linear peeled off film in a length of about 5 mm. The test is performed at three locations per spectacle lens, a spectacle lens with one or fewer peeled-off film locations is determined to be satisfactory, a spectacle lens with two or more peeled-off film locations is determined to be unsatisfactory, and the load that is one level lighter than the load when it is determined to be unsatisfactory is recorded as the withstand load. The withstand load of five spectacle lenses is evaluated in the same manner and the average value is taken as the withstand load T.

<2> The spectacle lens according to <1>,
wherein, after a wiping test is performed 5,000 times with a load of 2 kg, a contact angle $\theta_B$ of the surface of the antifouling layer with respect to water is 108° or more.
<3> The spectacle lens according to <2>,
wherein $\theta_B/\theta_A$ is 0.95 or more.
<4> A spectacle lens having an antifouling layer containing a group represented by Formula (1a):

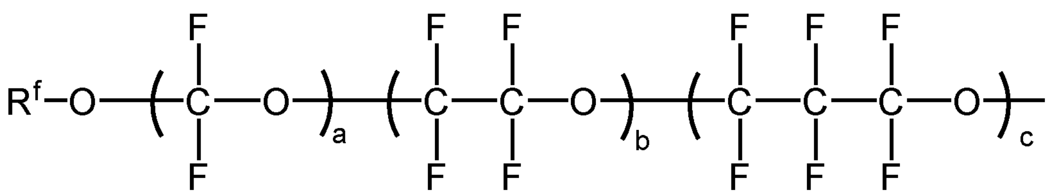

(1a)

(in the formula, $R^f$ is a fluorinated alkyl group having 1 to 20 carbon atoms, a is 0 to 100, b is 0 to 100, c is 0 to 100, and a+b+c is 10 to 200),
wherein, when the number of carbon atoms for $R^f$ in Formula (1a) is k, a value LA of [k+2×a+3×b+4×c] is 30 to 200.
<5> The spectacle lens according to any one of <1> to <3>,
wherein the antifouling layer has a group represented by Formula (1a):

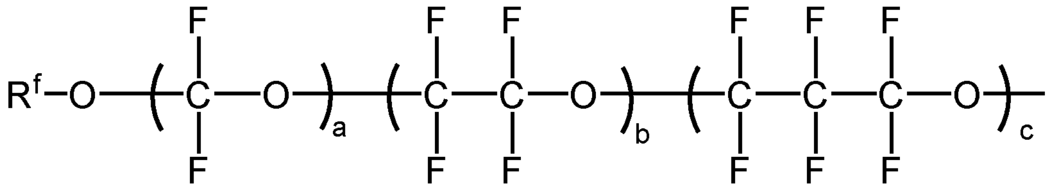 (1a)

(in the formula, $R^f$ is a fluorinated alkyl group having 1 to 20 carbon atoms, a is 0 to 100, b is 0 to 100, c is 0 to 100, and a+b+c is 10 to 200), and
when the number of carbon atoms for $R^f$ in Formula (1a) is k, a value LA of [k+2×a+3×b+4×c] is 30 to 200.
<6> The spectacle lens according to <4> or <5>,
wherein the antifouling layer has a group represented by Formula (2a):

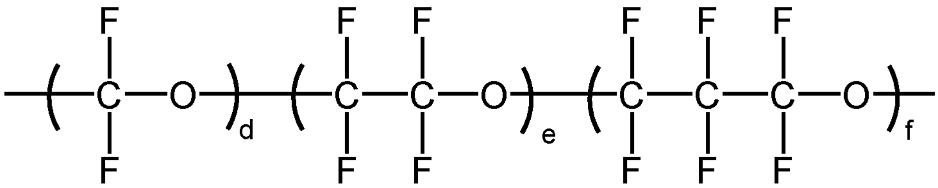 (2a)

(in the formula, d is 0 to 100, e is 0 to 100, f is 0 to 100, and d+e+f is 10 to 200), and
a value LB of [2×d+3×e+4×f] in Formula (2a) is 30 to 500.
<7> The spectacle lens according to <6>,
wherein LA/LB is 0.2 to 2.0.
<8> The spectacle lens according to <6> or <7>,
wherein a molar ratio [(1a)/(2a)] of the group represented by Formula (1a) to the group represented by Formula (2a) is 0.01 to 10.
<9> A spectacle lens having an antifouling layer which is a condensation product of an antifouling agent composition which contains a compound (A) having a silyl group and a fluorinated alkyl group and a compound (B) having a silyl group at at least one end of a molecular chain, wherein the number average molecular weight of the compound (A) is 100 to 10,000, the number average molecular weight of the compound (B) is 100 to 10,000, and the number average molecular weight is a number average molecular weight in terms of polymethyl methacrylate measured through gel permeation chromatography.
<10> The spectacle lens according to any one of <1> to <8>,
wherein the number average molecular weight of the compound (A) is 400 to 2,000, and the number average molecular weight of the compound (B) is 400 to 2,000.
<11> The spectacle lens according to <9>,
wherein the ratio (the number average molecular weight of the compound (A)/the number average molecular weight of the compound (B)) of the number average molecular weight of the compound (A) to the number average molecular weight of the compound (B) is 0.1 to 100.
<12> The spectacle lens according to any one of <9> to <11>,
wherein the molecular weight distribution (Mw/Mn) of the compound (A) is 1.0 to 1.2.
<13> The spectacle lens according to any one of <9> to <12>,
wherein the molecular weight distribution (Mw/Mn) of the compound (B) is 1.0 to 1.2.
<14> The spectacle lens according to any one of <9> to <13>,
wherein the ratio (Mz/Mw) of the z average molecular weight (Mz) to the weight average molecular weight (Mw) of the compound (A) is 1.0 to 1.2.
<15> The spectacle lens according to any one of <9> to <14>,
wherein the ratio (Mz/Mw) of the z average molecular weight (Mz) to the weight average molecular weight (Mw) of the compound (B) is 1.0 to 1.2.
<16> The spectacle lens according to any one of <9> to <15>,
wherein the antifouling agent composition contains 5 mass% to 95 mass% of the compound (A).

<17> The spectacle lens according to any one of <9> to <16>,
wherein the antifouling agent composition contains 5 mass% to 95 mass% of the compound (B).
<18> The spectacle lens according to any one of <9> to <17>,
wherein the antifouling agent composition contains 15 mass% to 30 mass% of the compound (A).
<19> The spectacle lens according to any one of <9> to <18>,
wherein the antifouling agent composition contains 70 mass% to 85 mass% of the compound (B).
<20> The spectacle lens according to any one of <9> to <19>,
wherein the compound (A) has a poly(fluorinated alkyleneoxy) fluorinated alkyl ether group.
<21> The spectacle lens according to <20>,
wherein the poly(fluorinated alkyleneoxy) fluorinated alkyl ether group is represented by the following Formula (1a):

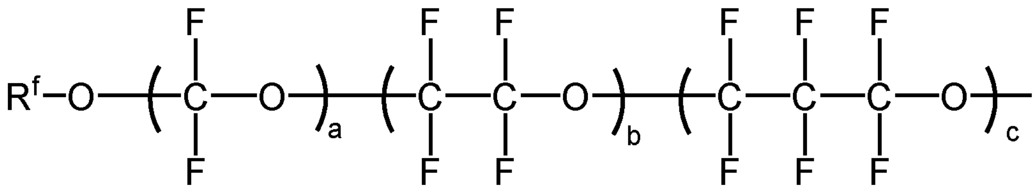 (1a)

(in Formula (1a), $R^f$ is a fluorinated alkyl group having 1 to 20 carbon atoms, a is 0 to 100, b is 0 to 100, c is 0 to 100, and a+b+c is 10 to 200).
<22> The spectacle lens according to any one of <9> to <21>,
wherein the compound (B) is linear.
<23> The spectacle lens according to any one of <9> to <22>,
wherein the compound (B) has a fluorinated alkylene framework.
<24> The spectacle lens according to <23>,
wherein the fluorinated alkylene framework is represented by the following Formula (2a):

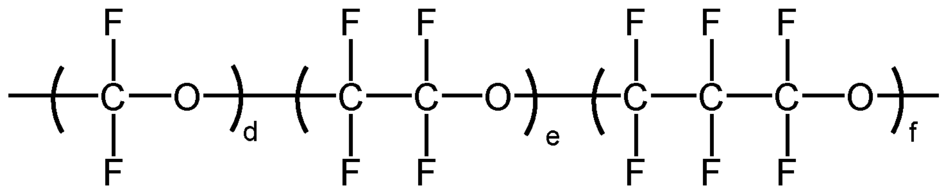 (2a)

(in Formula (2a), d is 0 to 100, e is 0 to 100, f is 0 to 100, and d+e+f is 10 to 200).
<25> A spectacle lens having an antifouling layer which is a condensation product of an antifouling agent composition containing a compound (A) having a group represented by Formula (1a):

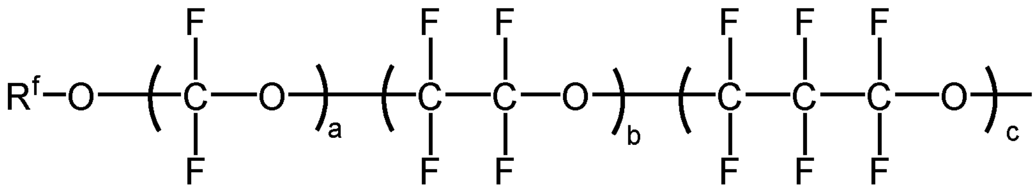 (1a)

(in the formula, $R^f$ is a fluorinated alkyl group having 1 to 20 carbon atoms, a is 0 to 100, b is 0 to 100, c is 0 to 100, and a+b+c is 10 to 200), and at least one silyl group,
wherein, when the number of carbon atoms for $R^f$ in Formula (1a) is k, the value of [k+2xa+3xb+4xc] is 30 to 200.
<26> The spectacle lens according to any one of <1> to <24>,
wherein the compound (A) has a group represented by Formula (1a):

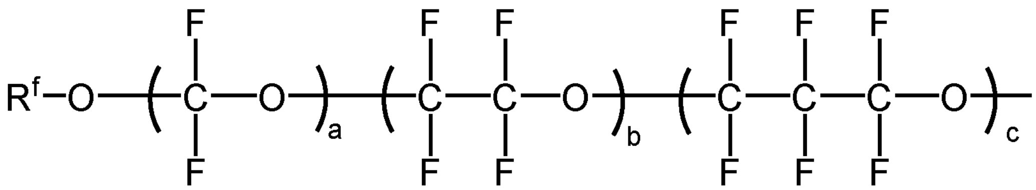 (1a)

(in the formula, $R^f$ is a fluorinated alkyl group having 1 to 20 carbon atoms, a is 0 to 100, b is 0 to 100, c is 0 to 100, and a+b+c is 10 to 200),

when the number of carbon atoms for $R^f$ in Formula (1a) is k, the value of [k+2xa+3xb+4xc] is 30 to 200.

<27> The spectacle lens according to <25> or <26>,

wherein the compound (B) contains a compound (B) having a group represented by Formula (2a):

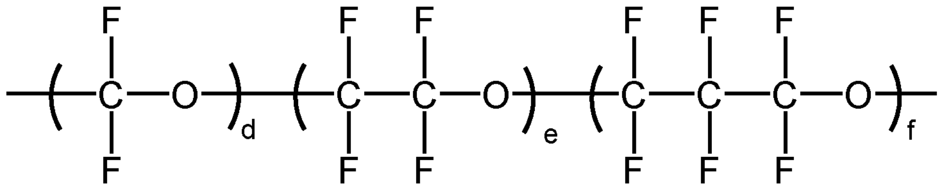

(2a)

(in the formula, d is 0 to 100, e is 0 to 100, f is 0 to 100, and d+e+f is 10 to 200), and silyl groups at both ends of a molecular chain, and

a value LB of [2xd+3xe+4xf] in Formula (2a) is 30 to 500.

<28> The spectacle lens according to <27>,

wherein LA/LB is 0.2 to 2.0.

<29> The spectacle lens according to <27> or <28>,

wherein a molar ratio [(1a)/(2a)] of the group represented by Formula (1a) to the group represented by Formula (2a) is 0.01 to 10.

<30> A spectacle lens having an antifouling layer which is a condensation product of an antifouling agent composition containing a compound (A) having at least one silyl group and a fluorinated alkyl group and a compound (B) having silyl groups at both ends of a molecular chain.

<31> The spectacle lens according to any one of <1> to <29>,

wherein the compound (A) has at least one silyl group and a fluorinated alkyl group, and the compound (B) has silyl groups at both ends of a molecular chain.

<32> The spectacle lens according to <30> or <31>,

wherein the antifouling agent composition contains 5 mass% to 95 mass% of the compound (A).

<33> The spectacle lens according to any one of <30> to <32>,

wherein the antifouling agent composition contains 5 mass% to 95 mass% of the compound (B).

<34> The spectacle lens according to any one of <30> to <33>,

wherein the antifouling agent composition contains 10 mass% to 50 mass% of the compound (A).

<35> The spectacle lens according to any one of <30> to <34>,

wherein the antifouling agent composition contains 50 mass% to 90 mass% of the compound (B).

<36> The spectacle lens according to any one of <30> to <35>,

wherein the number average molecular weight of the compound (A) is 100 to 10,000, and the number average molecular weight is a number average molecular weight in terms of polymethyl methacrylate measured through gel permeation chromatography.

<37> The spectacle lens according to any one of <30> to <36>,

wherein the compound (A) has a poly(fluorinated alkyleneoxy) fluorinated alkyl ether group.

<38> The spectacle lens according to <37>,

wherein the poly(fluorinated alkyleneoxy) fluorinated alkyl ether group is represented by the following Formula (1a):

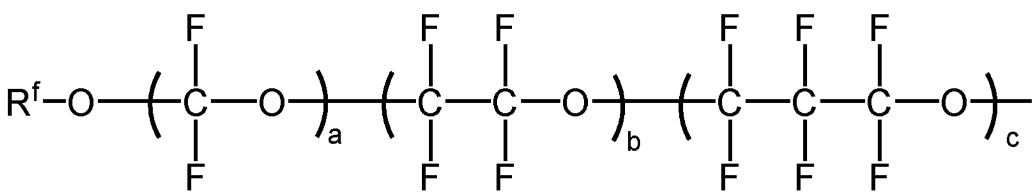

(1a)

(in Formula (1a), $R^f$ is a fluorinated alkyl group having 1 to 20 carbon atoms, a is 0 to 100, b is 0 to 100, c is 0 to 100, and a+b+c is 10 to 200).

<39> The spectacle lens according to any one of <30> to <38>,

wherein the compound (B) is linear.

<40> The spectacle lens according to any one of <30> to <39>,

wherein the compound (B) has a fluorinated alkylene framework.

<41> The spectacle lens according of <40>,

wherein the fluorinated alkylene framework is represented by the following Formula (2a):

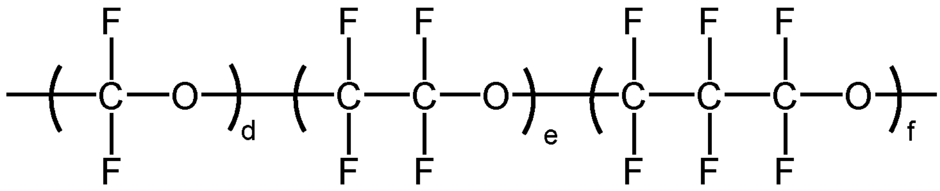 ( 2a )

(in Formula (2a), d is 0 to 100, e is 0 to 100, f is 0 to 100, and d+e+f is 10 to 200).
<42> An antifouling agent composition containing a compound (A) having a group represented by Formula (1a):

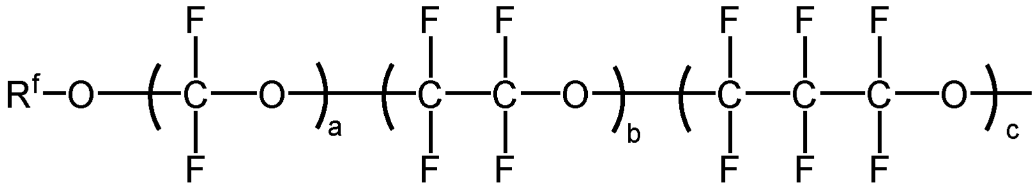 ( 1a )

(in the formula, $R^f$ is a fluorinated alkyl group having 1 to 20 carbon atoms, a is 0 to 100, b is 0 to 100, c is 0 to 100, and a+b+c is 10 to 200), and at least one silyl group,
wherein, when the number of carbon atoms for $R^f$ in Formula (1a) is k, a value of [k+2xa+3xb+4xc] is 30 to 200.
<43> The antifouling agent composition according to <42>, containing a compound (B) having a group represented by Formula (2a):

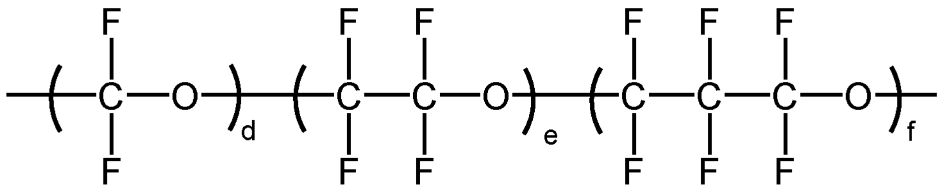 ( 2a )

(in the formula, d is 0 to 100, e is 0 to 100, f is 0 to 100, and d+e+f is 10 to 200), and silyl groups at both ends of a molecular chain,
wherein a value LB of [2xd+3xe+4xf] in Formula (2a) is 30 to 500.
<44> The antifouling agent composition according to <43>,
wherein LA/LB is 0.2 to 2.0.
<45> The antifouling agent composition according to <43> or <44>,
wherein a molar ratio [(1a)/(2a)] of the group represented by Formula (1a) to the group represented by Formula (2a) is 0.01 to 10.
<46> An antifouling agent composition containing a compound (A) having a silyl group and a fluorinated alkyl group and a compound (B) having a silyl group at at least one end of a molecular chain,
wherein the number average molecular weight of the compound (A) is 100 to 10,000, the number average molecular weight of the compound (B) is 100 to 10,000, and the number average molecular weight is a number average molecular weight in terms of polymethyl methacrylate measured through gel permeation chromatography.
<47> The antifouling agent composition according to any one of <42> to <45>,
wherein the number average molecular weight of the compound (A) is 100 to 10,000, the number average molecular weight of the compound (B) is 100 to 10,000, and the number average molecular weight is a number average molecular weight in terms of polymethyl methacrylate measured through gel permeation chromatography.
<48> An antifouling agent composition containing a compound (A) having at least one silyl group and a fluorinated alkyl group, and a compound (B) having silyl groups at both ends of a molecular chain.
<49> A method of producing a spectacle lens including a process of forming an antifouling layer on a spectacle lens using the antifouling agent composition according to any one of <42> to <48>.

<1a> A spectacle lens comprising, an antifouling layer including a condensed structure of a fluorinated alkyl group and a silyl group on an outermost surface thereof,

wherein a contact angle $\theta_A$ of a surface of the antifouling layer with respect to water is 108° or more, and a withstand load T is 3.5 kg or more in a withstand load test below.

<Withstand Load Test>

The surface of the spectacle lens is wiped off with acetone to remove grease, dirt and the like. In a reciprocating friction and wear tester (commercially available from Shinto Scientific Co., Ltd.), using steel wool (Bonstar #0000, commercially available from Nihon Steel Wool Co., Ltd.) cut into 70×18 mm strips and wrapped around an eraser, a convex surface of the spectacle lens is rubbed back and forth 20 times with a load of 2.5 kg, a load of 3.0 kg, a load of 3.5 kg, and a load of 4.0 kg, increasing in 0.5 kg increments. Then, the surface of the spectacle lens is wiped off with acetone again, and then exposed to light from a fluorescent lamp, and the reflected light is used to visually check whether there are peeled-off film scratches according to a linear peeled off film in a length of about 5 mm. The test is performed at three locations per spectacle lens, a spectacle lens with one or fewer peeled-off film locations is determined to be satisfactory, a spectacle lens with two or more peeled-off film locations is determined to be unsatisfactory, and the load that is one level lighter than the load when it is determined to be unsatisfactory is recorded as the withstand load. The withstand load of five spectacle lenses is evaluated in the same manner and the average value is taken as the withstand load T.

<2a> The spectacle lens according to <1a>,
wherein, after a wiping test is performed 5,000 times with a load of 2 kg, a contact angle $\theta_B$ of the surface of the antifouling layer with respect to water is 108° or more.
<3a> The spectacle lens according to <2a>,
wherein $\theta_B/\theta_A$ is 0.95 or more.

<1b> A spectacle lens having an antifouling layer containing a group represented by Formula (1a):

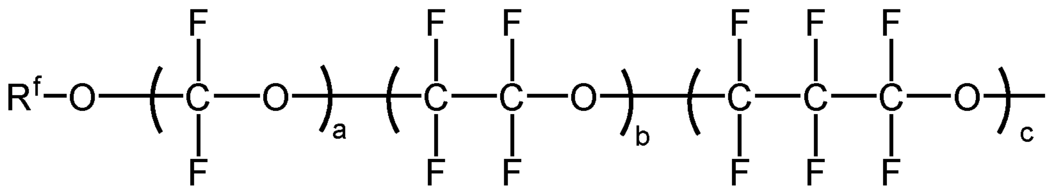

(1a)

(in the formula, $R^f$ is a fluorinated alkyl group having 1 to 20 carbon atoms, a is 0 to 100, b is 0 to 100, c is 0 to 100, and a+b+c is 10 to 200),
wherein, when the number of carbon atoms for $R^f$ in Formula (1a) is k, a value LA of [k+2×a+3×b+4×c] is 30 to 200.
<2b> The spectacle lens according to <1b>,
wherein the antifouling layer has a group represented by Formula (2a):

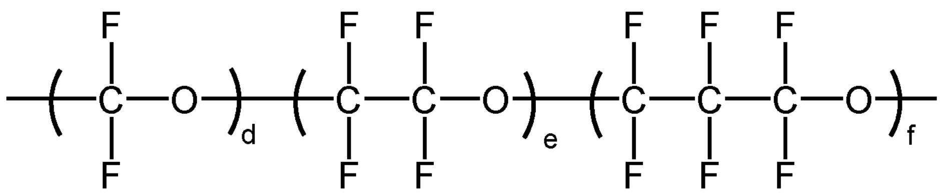

(2a)

(in the formula, d is 0 to 100, e is 0 to 100, f is 0 to 100, and d+e+f is 10 to 200), and
a value LB of [2×d+3×e+4×f] in Formula (2a) is 30 to 500.
<3b> The spectacle lens according to <2b>,
wherein LA/LB is 0.2 to 2.0.
<4b> The spectacle lens according to <2b> or <3b>,
wherein a molar ratio [(1a)/(2a)] of the group represented by Formula (1a) to the group represented by Formula (2a) is 0.01 to 10.
<5b> An antifouling agent composition containing a compound (A) having a group represented by Formula (1a):

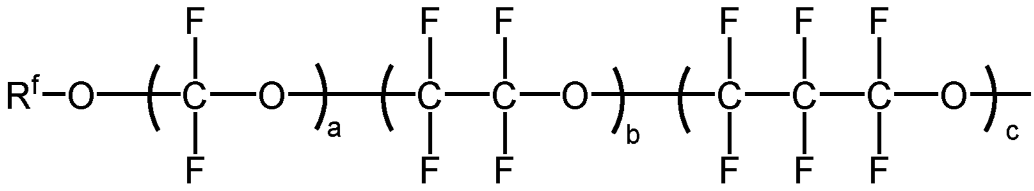 (1a)

(in the formula, $R^f$ is a fluorinated alkyl group having 1 to 20 carbon atoms, a is 0 to 100, b is 0 to 100, c is 0 to 100, and a+b+c is 10 to 200), and at least one silyl group,
wherein, when the number of carbon atoms for $R^f$ in Formula (1a) is k, a value of [k+2×a+3×b+4×c] is 30 to 200.
<6b> The antifouling agent composition according to <5b>, containing a compound (B) having a group represented by Formula (2a):

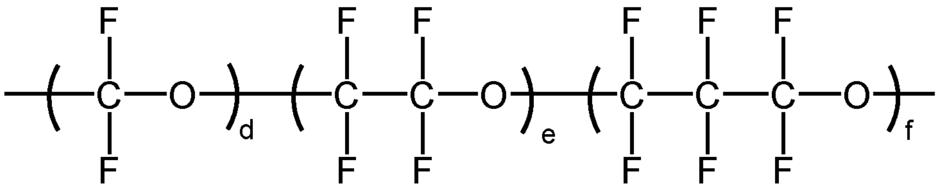 (2a)

(in the formula, d is 0 to 100, e is 0 to 100, f is 0 to 100, and d+e+f is 10 to 200), and silyl groups at both ends of a molecular chain,
wherein a value LB of [2×d+3×e+4×f] in Formula (2a) is 30 to 500.
<7b> The antifouling agent composition according to <6b>,
wherein LA/LB is 0.2 to 2.0.
<8b> The antifouling agent composition according to <6b> or <7b>
wherein a molar ratio [(1a)/(2a)] of the group represented by Formula (1a) to the group represented by Formula (2a) is 0.01 to 10.
<9b> A method of producing a spectacle lens including a process of forming an antifouling layer on a spectacle lens using the antifouling agent composition according to any one of <5b> to <8b>.

<1c> A spectacle lens having an antifouling layer which is a condensation product of an antifouling agent composition containing a compound (A) having at least one silyl group and a fluorinated alkyl group and a compound (B) having silyl groups at both ends of a molecular chain.
<2c> The spectacle lens according to <1c>,
wherein the antifouling agent composition contains 5 mass% to 95 mass% of the compound (A).
<3c> The spectacle lens according to <1c> or <2c>,
wherein the antifouling agent composition contains 5 mass% to 95 mass% of the compound (B).
<4c> The spectacle lens according to any one of <1c> to <3c>,
wherein the antifouling agent composition contains 10 mass% to 50 mass% of the compound (A).
<5c> The spectacle lens according to any one of <1c> to <4c>,
wherein the antifouling agent composition contains 50 mass% to 90 mass% of the compound (B).
<6c> The spectacle lens according to any one of <1c> to <5c>,
wherein the number average molecular weight of the compound (A) is 100 to 10,000, and the number average molecular weight is a number average molecular weight in terms of polymethyl methacrylate measured through gel permeation chromatography.
<7c> The spectacle lens according to any one of <1c> to <6c>,
wherein the compound (A) has a poly(fluorinated alkyleneoxy) fluorinated alkyl ether group.
<8c> The spectacle lens according to <7c>,
wherein the poly(fluorinated alkyleneoxy) fluorinated alkyl ether group is represented by the following Formula (1a):

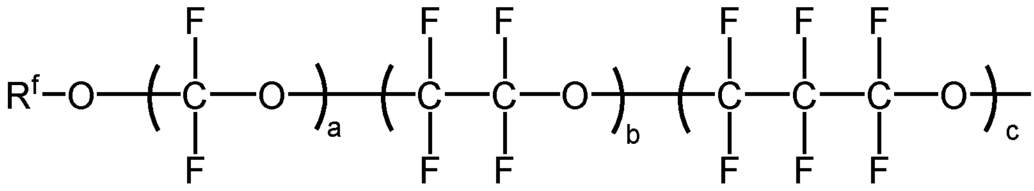
(1a)

(in Formula (1a), $R^f$ is a fluorinated alkyl group having 1 to 20 carbon atoms, a is 0 to 100, b is 0 to 100, c is 0 to 100, and a+b+c is 10 to 200).

<9c> The spectacle lens according to any one of <1c> to <8c>,
wherein the compound (B) is linear.

<10c> The spectacle lens according to any one of <1c> to <9c>,
wherein the compound (B) has a fluorinated alkylene framework.

<11c> The spectacle lens according to <10c>,
wherein the fluorinated alkylene framework is represented by the following Formula (2a):

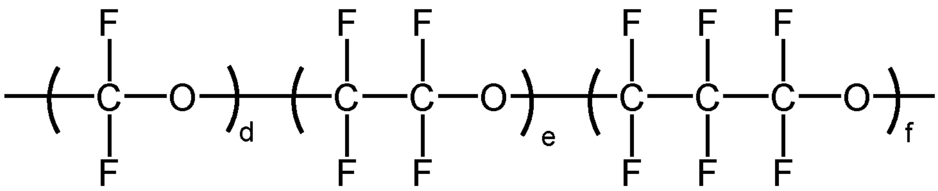
(2a)

(in Formula (2a), d is 0 to 100, e is 0 to 100, f is 0 to 100, and d+e+f is 10 to 200).

<12c> An antifouling agent composition containing a compound (A) having at least one silyl group and a fluorinated alkyl group and a compound (B) having silyl groups at both ends of a molecular chain.

<13c> A method of producing a spectacle lens including a process of forming an antifouling layer on a spectacle lens using an antifouling agent composition containing a compound (A) having at least one silyl group and a fluorinated alkyl group and a compound (B) having silyl groups at both ends of a molecular chain.

<1d> A spectacle lens having an antifouling layer which is a condensation product of an antifouling agent composition containing a compound (A) having a silyl group and a fluorinated alkyl group and a compound (B) having a silyl group at at least one end of a molecular chain,
wherein the number average molecular weight of the compound (A) is 100 to 10,000, the number average molecular weight of the compound (B) is 100 to 10,000, and the number average molecular weight is a number average molecular weight in terms of polymethyl methacrylate measured through gel permeation chromatography.

<2d> The spectacle lens according to <1d>,
wherein the number average molecular weight of the compound (A) is 400 to 2,000, and the number average molecular weight of the compound (B) is 400 to 2,000.

<3d> The spectacle lens according to <1d> or <2d>,
wherein the ratio (the number average molecular weight of the compound (A)/the number average molecular weight of the compound (B)) of the number average molecular weight of the compound (A) to the number average molecular weight of the compound (B) is 0.1 to 100.

<4d> The spectacle lens according to any one of <1d> to <3d>,
wherein the molecular weight distribution (Mw/Mn) of the compound (A) is 1.0 to 1.2.

<5d> The spectacle lens according to any one of <1d> to <4d>,
wherein the molecular weight distribution (Mw/Mn) of the compound (B) is 1.0 to 1.2.

<6d> The spectacle lens according to any one of <1d> to <5d>,
wherein the ratio (Mz/Mw) of the z average molecular weight (Mz) to the weight average molecular weight (Mw) of the compound (A) is 1.0 to 1.2.

<7d> The spectacle lens according to any one of <1d> to <6d>,
wherein the ratio (Mz/Mw) of the z average molecular weight (Mz) to the weight average molecular weight (Mw) of the compound (B) is 1.0 to 1.2.

<8d> The spectacle lens according to any one of <1d> to <7d>,
wherein the antifouling agent composition contains 5 mass% to 95 mass% of the compound (A).

<9d> The spectacle lens according to any one of <1d> to <8d>,

wherein the antifouling agent composition contains 5 mass% to 95 mass% of the compound (B).

<10d> The spectacle lens according to any one of <1d> to <9d>,

wherein the antifouling agent composition contains 15 mass% to 30 mass% of the compound (A).

<11d> The spectacle lens according to any one of <1d> to <10d>,

wherein the antifouling agent composition contains 70 mass% to 85 mass% of the compound (B).

<12d> The spectacle lens according to any one of <1d> to <11d>,

wherein the compound (A) has a poly(fluorinated alkyleneoxy) fluorinated alkyl ether group.

<13d> The spectacle lens according to <12d>,

wherein the poly(fluorinated alkyleneoxy) fluorinated alkyl ether group is represented by the following Formula (1a):

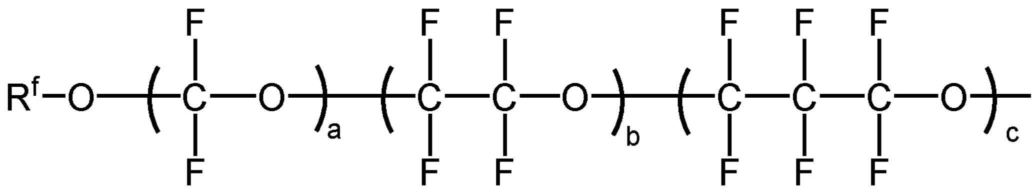 (1a)

(in Formula (1a), $R^f$ is a fluorinated alkyl group having 1 to 20 carbon atoms, a is 0 to 100, b is 0 to 100, c is 0 to 100, and a+b+c is 10 to 200).

<14d> The spectacle lens according to any one of <1d> to <13d>,

wherein the compound (B) is linear.

<15d> The spectacle lens according to any one of <1d> to <14d>,

wherein the compound (B) has a fluorinated alkylene framework.

<16d> The spectacle lens according to <15d>,

wherein the fluorinated alkylene framework is represented by the following Formula (2a):

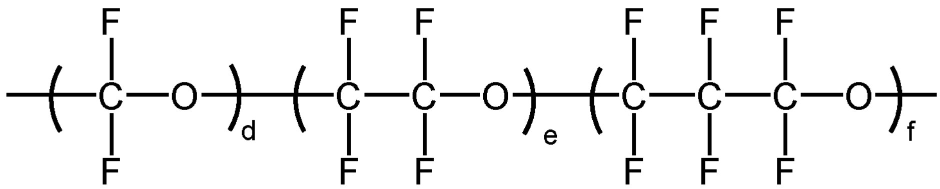 (2a)

(in Formula (2a), d is 0 to 100, e is 0 to 100, f is 0 to 100, and d+e+f is 10 to 200).

<17d> An antifouling agent composition containing a compound (A) having a silyl group and a fluorinated alkyl group and a compound (B) having a silyl group at at least one end of a molecular chain,

wherein the number average molecular weight of the compound (A) is 100 to 10,000, the number average molecular weight of the compound (B) is 100 to 10,000, and the number average molecular weight is a number average molecular weight in terms of polymethyl methacrylate measured through gel permeation chromatography.

<18d> A method of producing a spectacle lens including a process of forming an antifouling layer on a spectacle lens using an antifouling agent composition containing a compound (A) having a silyl group and a fluorinated alkyl group and a compound (B) having a silyl group at at least one end of a molecular chain,

wherein the number average molecular weight of the compound (A) is 100 to 10,000, the number average molecular weight of the compound (B) is 100 to 10,000, and the number average molecular weight is a number average molecular weight in terms of polymethyl methacrylate measured through gel permeation chromatography.

[Examples]

Hereinafter, the present embodiment will be described in more detail with reference to examples and comparative examples. Here, the present invention is not limited to the following examples.

[Gel Permeation Chromatography (Mn, Mw, Mz)]

5 mL of a measurement solvent to be described below was added to 3 mg of the sample, the mixture was slowly stirred at room temperature, and it was visually confirmed that the sample was dissolved in the measurement solvent. Then, filtration was performed using a 0.45 μm filter to prepare a measurement sample. The measurement sample was measured through gel permeation chromatography under the following conditions.

<Conditions>

Device: gel permeation chromatography (GPC)
Detector: differential refractive index (RI) detector (RI-504, sensitivity 32, commercially available from Showa Denko K.K.)
Column: Shodex HFIP-G 1 column (6.0 mm×5 cm, commercially available from Showa Denko K.K.) Shodex HFIP-606M 2 columns (6.0 mm×15 cm, commercially available from Showa Denko K.K.)
Solvent: hexafluoroisopropanol with 5 mM sodium trifluoroacetate
Flow rate: 0.2 mL/min
Column temperature: 40°C
Injection volume: 0.020 mL
Standard sample: monodisperse polymethyl methacrylate (PMMA), commercially available from Showa Denko K.K.

[Withstand Load Test]

The surface of the spectacle lens was wiped off with acetone to remove grease, dirt and the like. In a reciprocating friction and wear tester (commercially available from Shinto Scientific Co., Ltd.), using steel wool (Bonstar #0000, commercially available from Nihon Steel Wool Co., Ltd.) cut into 70×18 mm strips and wrapped around an eraser, the convex surface of the spectacle lens was rubbed back and forth 20 times with a load of 2.5 kg, a load of 3.0 kg, a load of 3.5 kg, and a load of 4.0 kg, increasing in 0.5 kg increments. Then, the surface of the spectacle lens was wiped off with acetone again, and then exposed to light from a fluorescent lamp, and the reflected light was used to visually check whether there were peeled-off film scratches according to a linear peeled off film in a length of about 5 mm. The test was performed at three locations per spectacle lens, a spectacle lens with one or fewer peeled-off film locations was determined to be satisfactory, and a spectacle lens with two or more peeled-off film locations was determined to be unsatisfactory. The load that was one level lighter than the load when it was determined to be unsatisfactory was recorded as the withstand load. The withstand load of five spectacle lenses was evaluated in the same manner, and the average values are shown in the table.

[Contact Angle-Water Repellency-]

The contact angle was measured using a "DM700" (commercially available from Kyowa Interface Science Co., Ltd.). The contact angle of the surface of the antifouling layer formed on the spectacle lens was measured. Water was used as a contact angle measurement liquid, 2 μL of water was added dropwise to the surface of the spectacle lens to measure the contact angle.

[Contact Angle after Wiping with Load of 2 kg-Water Repellency Durability-]

A spectacle lens was set in a friction and wear tester designed to perform a slide test on a substrate to be evaluated at a certain load, a certain speed, and a certain stroke. The media (sliding terminal) used in the test was an eraser wrapped with lens-cleaning paper. The media were attached to the friction and wear tester, the convex surface of the spectacle lens was pressed with a load of 2 kg, the stroke was set to 30 mm, and the convex surface was wiped by sliding back and forth 1,000 times. After sliding back and forth 1,000 times, the contact angle was measured by the above method. In addition, under the same conditions, the convex surface was slid back and forth 4,000 times (a total of 5,000 times), and the contact angle was measured by the above method.
After wiping was performed 1,000 times and 5,000 times, the contact angle was measured by the above method.

[Steel Wool Scratch Test-Abrasion Resistance-]

The surface of the spectacle lens was wiped off with acetone to remove grease, dirt and the like. Using steel wool (Bonstar #0000, commercially available from Nihon Steel Wool Co., Ltd.) cut into 15 mm squares, the convex surface of the spectacle lens was rubbed back and forth 20 times with a load of 1 kg. Then, the surface of the spectacle lens was wiped off with acetone again, and the condition of scratches was then visually confirmed under a fluorescent lamp. The evaluation criteria were as follows.

<Evaluation Criteria>

7: almost no scratches
6: few scratches were confirmed
5: 3 or fewer light scratches or 2 or fewer deep but thin scratches
4: more than 3 and 10 or fewer light scratches, or more than 2 and 6 or fewer deep but thin scratches
3: more than 10 and 20 or fewer light scratches or more than 6 and 10 or fewer deep but thin scratches
2: more than 20 and 30 or fewer light scratches or more than 10 and 20 or fewer deep but thin scratches
1: many deep scratches occurred, almost cloudy condition or shallow scratches but no surface film (weak film)

[Number of Repeating Units of Perfluoroalkyleneoxy Moiety]

The number of repeating units of perfluoroalkyleneoxy moieties was determined from the mass/z measured through matrix-assisted laser desorption/ionization mass spectrometry (MALDI-MS). From the structure identified through NMR, the molecular weight other than perfluoroalkyleneoxy moieties was calculated, and the numbers of repeating units ($CF_2O$), ($CF_2CF_2O$), and ($CF_2CF_2CF_2O$) were calculated.

[Preparation of Antifouling Agent Composition and Preparation of Antifouling Agent Pellets]

[Production Examples 1 to 5 and Comparative Production Example 1]

A composition obtained by mixing compounds shown in Table 1 was prepared as a 20 mass% solution, and impregnated into metal pellets in a copper container filled with steel wool so that the solid content after the solvent was evaporated was 15 mg. After impregnation with the 20 mass% solution, the solvent was evaporated by heating in an oven set at 80°C for 20 minutes, and the solid content was 15 mg.

Here, as a result of measuring the molecular weight by the above method, in the compound A-1, the number average molecular weight: Mn=700, the weight average molecular weight: Mw=760, the z average molecular weight: Mz=820, and the molecular weight distribution: Mw/Mn=1.1, Mz/Mw=1.1, and in the compound B-1, the number average molecular weight: Mn=1,080, the weight average molecular weight: Mw=1,190, the z average molecular weight: Mz=1,330, and the molecular weight distribution: Mw/Mn=1.1, Mz/Mw=1.1.

[Table 1]

**Table 1**

| | | | Production Example 1 | Production Example 2 | Production Example 3 | Production Example 4 | Production Example 5 | Comparative Production Example 1 |
|---|---|---|---|---|---|---|---|---|
| Antifouling agent composition | Compound (A) | Compound A- 1 | 25 | 20 | 17 | 14 | 100 | - |
| | Compound (B) | Compound B-1 | 75 | 80 | 83 | 86 | - | 100 |
| Numerical values are parts by mass | | | | | | | | |

The meanings of various abbreviations in Table 1 are as follows.

Compound A-1:

A compound (A) (LA=69) represented by Formula (1-1): $R^f$-O-$(CF_2O)_a$-$(CF_2CF_2O)_b$-$CF_2CH_2CH_2CH_2Si(OCH_3)_3$ (1-1) (in the formula, $R^f$=$C_3F_7$, a=15, b=12, and the arrangement of repeating units a and b, each indicating the number of units, is random).

Compound B-1:

A compound (B) (LB=130) represented by Formula (2-1): $(CH_3O)_3SiCH_2CH_2CH_2Si(CH_3)_2$-O-$Si(CH_3)_2CH_2CH_2OCH_2CF_2$-O-$(CF_2O)_d$-$(CF_2CF_2O)_e$-$(CF_2CF_2CF_2O)_f$-$CF_2CH_2OCH_2CH_2Si(CH_3)_2$-O-$Si(CH_3)_2$-$SiCH_2CH_2CH_2Si(OCH_3)$ (2-1) (in the formula, d=24, e=26, f=1, and the arrangement of repeating units d, e and f, each indicating the number of units, is random).

[Example 1 to 5 and Comparative Example 1]

(Deposition of Antifouling Agent Composition on Spectacle Lens)

In a glass container, a solution containing 90 parts by mass of colloidal silica (Snowtex-40, commercially available from Nissan Chemical Corporation), 81.6 parts by mass of an organosilicon compound methyltrimethoxysilane, 176 parts by mass of γ-glycidoxypropyltrimethoxysilane, 2.0 parts by mass of 0.5 N hydrochloric acid, 20 parts by mass of acetic acid, and 90 parts by mass of water was stirred at room temperature for 8 hours, and then left at room temperature for 16 hours to obtain a hydrolysis solution. 120 parts by mass of isopropyl alcohol, 120 parts by mass of n-butyl alcohol, 16 parts by mass of aluminum acetylacetone, **0.2** parts by mass of a silicone surfactant, and **0.1** parts by mass of an ultraviolet absorber were added to the solution, the mixture was stirred at room temperature for 8 hours, and then aged at room temperature for 24 hours to obtain a coating solution. A plastic lens substrate (commercially available from Hoya Corporation, product name EYAS, formulation S0.00, C0.00) pretreated with an alkaline aqueous solution was immersed in the above coating solution, and after immersion was completed, the lens substrate was pulled up at a pulling speed of 20 cm/min and heated at 120°C for 2 hours to form a cured film, and a hard coat layer (layer A) was formed. Next, an antireflection layer in which silica and zirconia were alternately laminated was formed on the hard coat layer by a vacuum deposition method.

After the antireflection layer was deposited, an ion gun treatment was performed in order to activate the surface. The ion gun treatment was performed under the following conditions.

Acceleration voltage: 500 V
Acceleration current: 230 mA
Introduced gas: oxygen (20 sccm)
Ion irradiation time: 30 seconds

Then, a dome on which the substrate was set was moved to a chamber for depositing the antifouling agent composition. In the chamber, pellets impregnated with the antifouling agent composition (refer to Table 2) prepared in the above production example were set on a halogen heater heating table. The pellets were heated with a halogen heater and the antifouling agent composition in the pellets was deposited. The saturated temperature during heating was about 600°C.

After the antifouling agent composition was deposited, the spectacle lens was removed and put into an oven set at 60°C and left for 4 hours for annealing.

The obtained spectacle lenses were evaluated by the following method. The results are shown in Table 2.

[Table 2]

**Table 2**

| | | Example1 | Example2 | Example3 | Example4 | Example5 | Comparative Example 1 |
|---|---|---|---|---|---|---|---|
| Antifouling agent composition | | Production Example1 | Production Example2 | Production Example3 | Production Example4 | Production Example5 | Comparative Producion Example1 |
| Composition (parts by mass) | Compound (A) | 25 | 20 | 17 | 14 | 100 | 0 |
| | Compound (B) | 75 | 80 | 83 | 86 | 0 | 100 |
| Withstand load (kg) | | 4.0 | 4.0 | 3.8 | 3.5 | 4.0 | 3.4 |
| Contact angle(°) | | 110.4 | 109.7 | 109.1 | 108.6 | 115.6 | 109.4 |
| Contact angle after wiping with load of 2 kg (°)) | 1000times | 109.1 | 109.7 | 109.0 | 108.6 | 93.2 | 108.4 |
| | 5000times | 101.2 | 109.0 | 108.6 | 108.0 | - | 108.4 |
| Steel wool scratch test | | 6 | 6 | 5 | 5 | 6 | 4 |

Based on the above results of examples and comparative examples, it can be understood that the present embodiment provides a spectacle lens having excellent water repellency, load resistance, and abrasion resistance, an antifouling agent composition, and a method of producing a spectacle lens.

In addition, based on the results of Examples 1 to 4, it can be understood that the third embodiment provides a spectacle lens having both excellent withstand load and water repellency durability, an antifouling agent composition, and a method of producing a spectacle lens.

[Reference Signs List]

1 Spectacle lens
11 Spectacle lens substrate
11a, 21fa, 31fa Object-side surface
11b, 21bb, 31bbEyeball-side surface
21f, 21b Hard coat layer
31f, 31b Functional layer
41f, 41b Antifouling layer

## Claims

1. A spectacle lens comprising, an antifouling layer including a condensed structure of a fluorinated alkyl group and a silyl group on an outermost surface thereof,

   wherein a contact angle $\theta_A$ of a surface of the antifouling layer with respect to water is 108° or more, and
   a withstand load T is 3.5 kg or more in a withstand load test below:
   <Withstand Load Test>
   The surface of the spectacle lens is wiped off with acetone to remove grease, dirt and the like. In a reciprocating friction and wear tester (commercially available from Shinto Scientific Co., Ltd.), using steel wool (Bonstar #0000, commercially available from Nihon Steel Wool Co., Ltd.) cut into 70×18 mm strips and wrapped around an eraser, a convex surface of the spectacle lens is rubbed back and forth 20 times with a load of 2.5 kg, a load of 3.0 kg, a load of 3.5 kg, and a load of 4.0 kg, increasing in 0.5 kg increments. Then, the surface of the spectacle lens is wiped off with acetone again, and then exposed to light from a fluorescent lamp, and the reflected light is used to visually check whether there are peeled-off film scratches according to a linear peeled off film in a length of about 5 mm. The test is performed at three locations per spectacle lens, a spectacle lens with one or fewer peeled-off film locations is determined to be satisfactory, a spectacle lens with two or more peeled-off film locations is determined to be unsatisfactory, and the load that is one level lighter than the load when it is determined to be unsatisfactory is

recorded as the withstand load. The withstand load of five spectacle lenses is evaluated in the same manner and the average value is taken as the withstand load **T.**

2. The spectacle lens according to claim 1, wherein, after a wiping test is performed 5,000 times with a load of 2 kg, a contact angle $\theta_B$ of the surface of the antifouling layer with respect to water is 108° or more.

3. The spectacle lens according to claim 2, wherein $\theta_B/\theta_A$ is 0.95 or more.

4. The spectacle lens according to claim 1, wherein the antifouling layer has a group represented by Formula (1a):

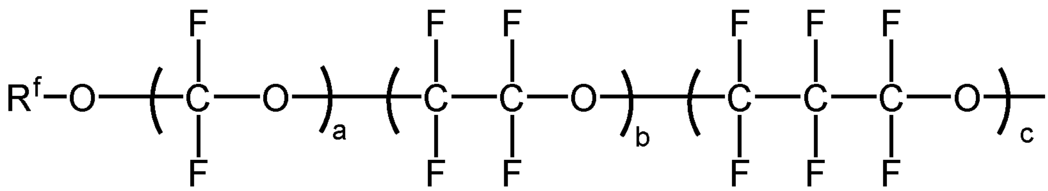

(1a)

(in the formula, $R^f$ is a fluorinated alkyl group having 1 to 20 carbon atoms, a is 0 to 100, b is 0 to 100, c is 0 to 100, and a+b+c is 10 to 200), and
when the number of carbon atoms for $R^f$ in Formula (1a) is k, a value LA of [k+2×a+3×b+4×c] is 30 to 200.

5. The spectacle lens according to claim 4, wherein the antifouling layer has a group represented by Formula (2a):

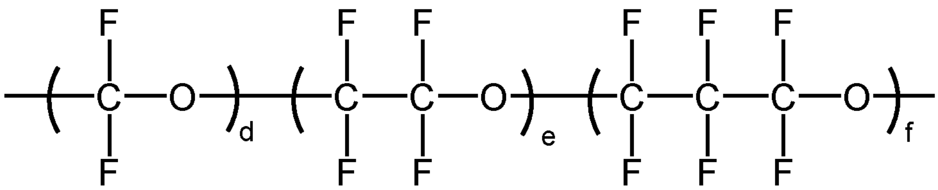

(2a)

(in the formula, d is 0 to 100, e is 0 to 100, f is 0 to 100, and d+e+f is 10 to 200), and
a value LB of [2×d+3×e+4×f] in Formula (2a) is 30 to 500.

6. The spectacle lens according to claim 5, wherein LA/LB is 0.2 to 2.0.

7. The spectacle lens according to claim 5, wherein a molar ratio [(1a)/(2a)] of the group represented by Formula (1a) to the group represented by Formula (2a) is 0.01 to 10.

Fig. 1

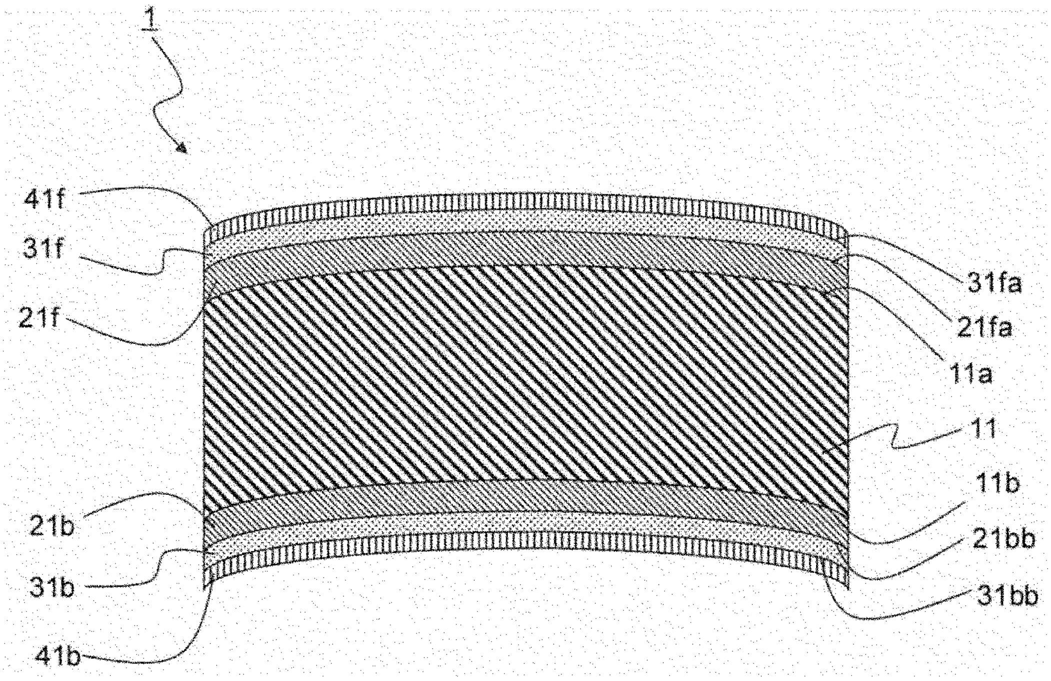

## INTERNATIONAL SEARCH REPORT

International application No.
**PCT/JP2023/043897**

**A. CLASSIFICATION OF SUBJECT MATTER**

***G02C 7/00***(2006.01)i; ***G02B 1/14***(2015.01)i; ***G02B 1/18***(2015.01)i; ***G02C 13/00***(2006.01)i
FI: G02C7/00; G02B1/14; G02B1/18; G02C13/00

According to International Patent Classification (IPC) or to both national classification and IPC

**B. FIELDS SEARCHED**

Minimum documentation searched (classification system followed by classification symbols)

G02C7/00; G02B1/14; G02B1/18; G02C13/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2012-072272 A (SHIN-ETSU CHEMICAL CO LTD) 12 April 2012 (2012-04-12) paragraphs [0001], [0051], [0056]-[0068], table 1, paragraphs [0078], [0081], [0083]-[0084], table 2, examples 1-6 | 1-7 |
| X | JP 2016-037541 A (SHIN-ETSU CHEMICAL CO LTD) 22 March 2016 (2016-03-22) paragraphs [0061], [0068], [0076], table 1, paragraphs [0082]-[0083], table 2, example 5 | 1-7 |
| A | JP 2020-204736 A (HOYA LENS THAILAND LTD) 24 December 2020 (2020-12-24) entire text, all drawings | 1-7 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 December 2023** | **16 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/043897**

| Patent document cited in search report | Publication date (day/month/year) | Patent family member(s) | Publication date (day/month/year) |
|---|---|---|---|
| JP 2012-072272 A | 12 April 2012 | US 2012/0077041 A1<br>paragraphs [0002], [0057], [0061]-[0072], [0084]-[0085], [0092]-[0097], [0104]-[0109], tables 1-2<br>EP 2436716 A1<br>KR 10-2012-0032442 A<br>CN 102558877 A<br>TW 201213446 A | |
| JP 2016-037541 A | 22 March 2016 | US 2016/0040039 A1<br>paragraphs [0065], [0085]-[0087], [0124]-[0128], tables 1-2<br>EP 3006447 A1<br>CN 105331259 A<br>KR 10-2016-0018426 A<br>TW 201619312 A | |
| JP 2020-204736 A | 24 December 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018004921 A